# EUROPEAN PATENT SPECIFICATION

(11) **EP 4 473 048 B1**
(45) Date of publication and mention of the grant of the patent: **24.09.2025**
(21) Application number: 23707793.8
(22) Date of filing: 02.02.2023
(51) Int. Cl.: C08K 3/04, C08K 3/32, C08K 5/00, C08L 7/00, C08L 23/16, C08L 27/16, C08L 43/04

(54) **A COMPOSITION SUITABLE FOR THE PRODUCTION OF A THERMOSETTING ELASTOMER WITH ANTIMICROBIAL CAPABILITIES BY MEANS OF VULCANIZATION BY MOULDING**
ZUSAMMENSETZUNG ZUR HERSTELLUNG EINES WÄRMEHÄRTBAREN ELASTOMERS MIT ANTIMIKROBIELLEN EIGENSCHAFTEN MITTELS VULKANISATION DURCH FORMEN
COMPOSITION CONVENANT POUR LA PRODUCTION D'UN ÉLASTOMÈRE THERMODURCISSABLE DOTÉ DE PROPRIÉTÉS ANTIMICROBIENNES AU MOYEN D'UNE VULCANISATION PAR MOULAGE

(30) Priority: 04.02.2022 IT 202200002048
(43) Date of publication of application: 11.12.2024
(73) Proprietor: Scudo Technology S.r.l., 24060 Adrara San Martino (BG) (IT)
(72) Inventor: PIEVANI, Michele, 24060 Viadanica (BG) (IT)
(74) Representative: Dragotti & Associati S.R.L.
(86) International application number: PCT/IB2023/050905
(87) International publication number: WO 2023/148645

(56) References cited:
- US-A1- 2008 187 560
- US-B2- 10 051 867

## Description

### FIELD OF APPLICATION

The present invention relates to a composition suitable for the production of a thermosetting elastomer with antimicrobial capabilities by means of vulcanization by moulding.

### STATE OF THE ART

As known, elastomers are polymers in a rubbery state containing weak or strong bonds that reinforce their structure, enhancing their mechanical performance. The main characteristic of these polymers is their ability to undergo huge elastic deformations, in other words they can be elongated several times and revert to their original dimension once they are at rest again.

They are divided into two main classes: thermoplastic elastomers and thermosetting elastomers. Specifically, polymers which, in appropriate temperature and pressure conditions and/or in the presence of particular compounds, are transformed into rigid, insoluble and infusible materials in a process generally called vulcanization are called thermosetting polymers. Said transformation occurs following cross-linking reactions that take place between the polymer chains with the formation of strong bonds (covalent or ionic). Some thermosetting polymers are cross-linked by means of heat only or through combinations of pressure and heat, while others can be cross-linked through chemical reactions at ambient temperature.

The best-known vulcanization techniques include compression moulding and injection moulding.

The former consists in high-pressure vulcanization of the material by means of a heated mould so as to give it a definitive shape. In particular, the mould, generally made of aluminium or steel, reproduces the final shape of the article to be obtained and is divided into two or more parts, according to the complexity of the article, so as to allow the ejection thereof at the end of moulding. The press on which the mould is fixed is provided with electrically heated and thermocontrolled beds which maintain the mould at the right temperature for moulding of the elastomer being processed, generally between 150°C and 170°C. The rubber to be processed is generally first calendered in sheets of suitable thickness and then cut into pieces having the desired size and weight. Alternatively, it is extruded in various shapes and then cut to the required size and weight. The actual compression moulding step consists in positioning the prepared rubber, having appropriate shape and weight, inside the heated mould, which is then closed under pressure for a time sufficient to allow vulcanization of the rubber in its new definitive shape. The article is generally ejected manually and, at the mould closure, always has a (large) burr which must be removed by the operator.

In injection moulding, on the other hand, the elastomeric material is fused and injected at high pressure into a closed mould (which is opened after solidification of the article).

Generally the injection takes place at pressures and temperatures such as to allow the "plasticized" material to flow inside the machine and the mould.

Compression moulding therefore differs from injection moulding in that in the latter method the rubber is injected hot, by means of an extruder, directly into the already closed and pressurized mould. The article is generally automatically ejected and also the deburring, when necessary, is carried out fully automatically. Although similar, the presses are produced specifically for the two types of moulding.

Compression moulding allows easier incorporation of inserts, such as textile or metal inserts, in the article and the processing of elastomers which have superior characteristics but are difficult to process by injection moulding. It is therefore more suitable for small and medium-sized production. Injection moulding, on the other hand, guarantees uniformity of the articles, also in aesthetic terms, and allows shorter production times with consequent economic advantage. It is therefore more suitable for large-scale production due to the longer time required for preparation of the press.

The elastomers most commonly used for these two processes are ethylene propylene diene monomer (EPDM) rubbers, silicone-based rubbers (VMQ), nitrile rubbers (NBR), hydrogenated nitrile rubbers (HNBR), natural rubbers (NR), fluorinated elastomers (FKM), perfluorocarbon rubber perfluoro elastomer, tetrafluoroethylene-perfluoro vinyl ether (FFKM), butadiene rubber (BR) and butyl rubber (IIR).

The thermosetting elastomers obtained from these processes are widely applied in many different sectors, mainly automotive and electric household appliances. They are also widely used to manufacture products designed to come into contact with parts of human and/or animal bodies such as, for example, catheters and teatcup liners for automatic milking systems.

Some of said applications have evident needs in terms of antimicrobial protection, especially those in which hygiene is an important requirement.

For example, with reference to automatic milking systems, the teatcup liner is the only part of the milking system that comes into direct contact with the teat and is therefore the most important component, given its evident functional and health implications. In fact, milking and all the operations connected with it play an important role in encouraging or discouraging the onset of mammary infections and in influencing the number of somatic cells in the milk. Good milking practice can firstly limit the risk of mastitis (an inflammatory process of the mammary gland) with positive effects on animal health, and also on quantitative-qualitative milk production. In fact, mastitis is associated with an increase in the somatic cells in milk and entails a reduction in production and alteration of the compositional quality of the milk with negative effects on cheese yield and quality. Mastitis is mainly caused by micro organisms that can be classed, based on their transmission characteristics, into contagious (*Staphylococcus aureus, Streptococcus agalactiae* and *Mycoplasma spp*.), environmental (*Escherichia coli, Streptococcus uberis, Streptococcus dysgalactiae,* etc.) and opportunistic (coagulase-negative Staphylococci, *Prototheca spp.,* Mycetes, etc.).

Mastitis represents an important non-negligible cost: the main consequences are reduced milk production, lower milk prices due to lower quality, the need to discard the milk obtained from sick and treated animals, veterinary treatment and testing costs, cost of replacing eliminated animals, risk of non-collection of the milk and possible fines due to the presence of inhibitory compounds in the milk. Mastitis represents a problem also in environmental terms: in fact, the milk loss (milk not produced or discarded milk) associated with mastitis increases the environmental cost of every litre of milk sold both in terms of polluting emissions (greenhouse gases, nitrates in water, etc.) and in terms of consumption of non-renewable resources (soil, water, energy). Furthermore, premature elimination of the animals caused by mastitis has negative effects on environmental sustainability due to the environmental costs associated with the breeding of replacements (mastitis continues to be one of the main causes of elimination of cows). Mastitis is important also in terms of food safety of milk since some mastidogenic bacteria are able to cause diseases in humans. In addition to this, there are risks associated with the development of antibiotic resistance connected with the use of veterinary medicines for the treatment of mastitis.

On the basis of the above, it is important that the teatcup liner complies with stringent hygiene regulations while at the same time being delicate on the sensitive teats and guaranteeing efficient milking. In fact, direct contact with the teat and with the udder exposes the teatcup liner to the risk of contamination due to pathogens present in these areas. Use of the contaminated equipment on several animals creates the conditions for transmission of these pathogens, thus favouring the diffusion of mastitis.

The main way of preventing these problems is by specific maintenance programmes that entail frequent cleaning and disinfection of these components. However, these cleaning and disinfection procedures (in addition to being not particularly efficient and not easy to apply also in economic terms) can lead to alteration of the structure of the teatcup liner and, consequently, the continual replacement thereof (with obvious financial repercussions). It is therefore necessary to overcome these problems.

As said, antimicrobial protection can be necessary in all applications in which hygiene is an important requirement, also where the use of thermosetting elastomers is not yet very widespread such as, for example, the sectors of food production or pharmaceutical products and food packaging.

In this regard, numerous studies conducted in the poultry sector on laying hens and broiler chickens have shown a significant presence of bacteria such as *Salmonella, E. coli* and *Campylobacter spp.,* with obvious repercussions in terms of food poisoning.

In particular, the importance of the presence of *E. coli* derives from its role in the development, exchange and spread of the determinants of resistance to the various antimicrobial agents (in addition to its potential as an opportunistic pathogen in humans). In fact, the improper use of antimicrobial agents in animal productions represents a potential risk factor for the selection and spread of resistant micro organisms and determinants of antimicrobial resistance (AMR) from animals to humans through food consumption.

Furthermore, it has been observed that eggs are among the foods that can carry salmonella. In fact, these bacteria commonly reside in the digestive system of hens and other birds of commercial interest. Since the reproductive pathways of hens have their end portion in common with their digestive pathways, contamination of the egg can occur at this level (typically at the level of the shell). Said contaminations can take place also after laying of the egg and more specifically by contact with the faeces of other birds. It is therefore clear that the shell is the part of the egg that can be most easily contaminated. The shell can also represent a source of contamination for the other foods that come into contact with it (for example during storage) . Although these risks are minimal in the large-scale retail trade (where eggs undergo stringent controls before being sold in cardboard or plastic boxes), they are not zero.

In this context, thermosetting elastomer-based articles coated with a coating containing an antimicrobial agent have recently been developed.

For example, the patent application EP1965719 (A2) describes elastomeric articles (such as, for example, surgical gloves) comprising an antimicrobial surface coating. Said surface coating comprises a hydrophilic film-forming polymer, a hydrophobic component and a non-volatile water-soluble antimicrobial agent. However, said articles have the drawback of not being compatible with long-term use, since their wear causes deterioration of the coating and, consequently, loss of their antimicrobial capability.

The production of thermosetting elastomers comprising antimicrobial additives within the polymer matrix is difficult due to the fact that said additives can be degraded, modified, lost or in any case rendered inactive during the vulcanization and post-vulcanization steps. Consequently, the antimicrobial capability of the thermosetting elastomer obtained is zero or in any case very limited.

For example, the patent application WO2004035666A2 describes elastomers comprising antimicrobial polymers added by means of coating or directly in the polymer mixture. However, one of the main drawbacks of antimicrobial polymers is that said macromolecules, due to their dimensions, have a fairly low speed of action. Consequently, in applications requiring a rapid microbial activity, said antimicrobial polymers do not have any practical value. Furthermore, the use of antimicrobial polymers is characterized by high toxicity and loss of effectiveness in the long term.

The document US 2008/187560 describes moulded rubber objects containing antimicrobial agents like inorganic silver and organic antimicrobial agents, which control the growth of the biofilm on the surface of the moulded article.

The document US 10051867 describes antimicrobial master batches, for mixing with polymers, that use migration support agents to improve surface antimicrobial effectiveness.

### SUBJECT OF THE INVENTION

The object of the present invention is therefore to provide a composition suitable for the production of a thermosetting elastomer with antimicrobial capabilities by means of vulcanization by moulding.

Specifically, the subject of the present invention is a composition comprising:
- at least one elastomer, preferably selected from the group formed of EPDM, VMQ, NBR, HNBR, NR, FKM, FFKM, BR and IIR;
- at least one catalyst and/or at least one vulcanization activator;
- an antimicrobial additive in a quantity varying from 0.5% to 5%, preferably approximately 1% by weight relative to the total weight of said composition and in turn comprising zinc pyrithione and silver phosphate glass in a 1:1 ratio by weight, preferably in a total quantity by weight relative to the total weight of said antimicrobial additive of at least 98%.

The term "catalyst" indicates a compound or a mixture of compounds able to modify the chemical reaction speed of the vulcanization process without being consumed during said process and remaining unchanged at the end of the process.

Examples of catalysts that can be used in the present invention are 2,5-dimethyl-2,5-di(ter-butylperoxy)hexane, platinum complexes (0), 1,3-divinyl-1,1,3,3-tetramethyldisiloxane and/or complexes in solution of vinyl terminated polydimethylsiloxane. The term "activator" indicates a compound or a mixture of compounds capable of facilitating initiation of the chemical reaction of the vulcanization process, reducing the quantity of thermal energy required to start the process.

Examples of activators that can be used in the present invention are zinc oxide, [3-(2,3-epoxypropoxy)-propyl]-trimethoxy silane, zinc carbonate, calcium dihydroxide and/or magnesium oxide, 1,3,5-triallyl isocyanurate, octadecylamine, titanium dioxide, polyethylene glycol, stearic acid, triallyl cyanurate, octadecylamine.

A further subject of the present invention is a thermosetting elastomer with antimicrobial capabilities obtained through a vulcanization process comprising:
- a compression moulding step or an injection moulding step of the composition according to one of the claims 1-2 and
- a post-vulcanization step.

A further subject of the invention is use of the thermosetting elastomer according to the invention to produce teatcup liners for milking and/or the extraction of milk from animals and/or humans.

A further subject of the invention is use of the thermosetting elastomer according to the invention in the field of food packaging, more preferably for packaging eggs or for packaging poultry meat.

A further subject of the invention is use of the thermosetting elastomer according to the invention in elements of machines for production plants or processing of foods and/or pharmaceutical products, machines for drinking water treatment systems or in the sector of medical devices, or in plumbing systems for domestic or industrial use.

In particular, the thermosetting elastomer according to the invention is used for seal elements or gaskets.

A further subject of the invention is use of the thermosetting elastomer according to the invention for the production of cases, containers, covering elements or similar such as, for example, mobile phone covers or cases for electronic devices.

Further subjects will become evident from the following detailed disclosure of the invention.

### DESCRIPTION OF THE DRAWINGS

The characteristics and advantages of the present invention will be clearer from the following description of preferred nonlimiting embodiment examples thereof, in which the Figures show the experimental data of the abatement tests conducted on thermosetting elastomers according to the present invention.

### DETAILED DISCLOSURE OF THE INVENTION

It has surprisingly been found that the composition according to the present invention allows the production by means of vulcanization by moulding (compression or injection) of a thermosetting elastomer having antimicrobial capabilities.

The antimicrobial capabilities of the thermosetting elastomer obtained from said composition derive from the presence of an antimicrobial additive in a quantity that varies from 0.5% to 5%, preferably approximately 1% by weight relative to the total weight of said composition. Said antimicrobial additive in turn comprises zinc pyrithione and silver phosphate glass in a 1:1 ratio by weight, preferably in a total quantity by weight relative to the total weight of said antimicrobial additive of at least 98%.

The zinc pyrithione (Cas. No. 13463-41-7) is a zinc coordination compound in which the Zn²⁺ ions are coordinated by the oxygen and sulphur atoms of the pyrithione ligand. It has an antimycotic and antibacterial activity.

The silver phosphate glass (Cas. No. 308069-39-8) is a compound that allows controlled release of silver ions.

The antimicrobial properties of silver against bacteria and fungi have been known since ancient times. Interest in these properties has re-emerged with the increase in recorded cases of bacterial resistance.

Specifically, it has surprisingly been found that the antimicrobial activity of said antimicrobial additive remains even after treating said composition by means of vulcanization by compression moulding or injection moulding in order to obtain the relative thermosetting elastomer.

The latter, specifically, is obtained through a vulcanization process comprising:
- a compression moulding step or an injection moulding step of the composition according to one of the claims 1-2 and
- a post-vulcanization step.

It should be noted that the antimicrobial effectiveness of the various thermosetting elastomers obtained from said composition as previously described has a high speed of action, long duration and ability to remain even after cleaning processes. This is due to the fact that the antimicrobial additive included in the initial composition is incorporated in the polymer matrix. Furthermore, since said thermosetting elastomers can be obtained both by compression moulding and injection moulding, they benefit from the versatility in terms of processability, uniformity and production volume offered by the two processes.

In a particular embodiment, said composition comprises one or more compounds selected from the group formed of vulcanizers, plasticizers, antioxidants, fillers, reinforcers, colouring agents, process adjuvants, accelerators and inhibitors. Examples of vulcanizing agents (namely compounds that carry out the chemical cross-linking reaction consisting in the formation of stable chemical bonds between the polymer chains) are benzyltriphenylphosphonium salt with 4,4'-[2,2,2-trifluoro-1-(trifluoromethyl) ethylidene]bis [phenol] (1:1), 4,4'-(hexafluoroisopropylidene) diphenol, benzyltriphenylphosphonium chloride, 2,5-dimethyl-2,5-di(tert-butylperoxy)hexane, propylidene trimethyl trimethacrylate, sulphur, 4-4' dithiodimorpholine, bis(ter-butyldioxyisopropyl)benzene, zinc diethyldithiocarbamate (ZDEC), tetramethylthiuram disulphide (TMTD), zinc pyrithione.

Examples of plasticizing agents are mineral oil, paraffin oil, refined oil, waxes like carnauba wax or dipolyethylene wax or refined rice bran wax, long-chain fatty acids and derivatives thereof.

Examples of antioxidant agents are 2,2'-methylene-bis-(4-methyl-6-tert-butyl-phenol), 1,2-dihydro-2,2,4-trimethylquinoline, 6,6'-di-ter-butyl-2,2'-methylenedi-p-cresol and styrenated phenol.

Examples of filler agents are barium sulphate, calcium metasilicate (wollastonite) and calcium carbonate.

Examples of reinforcing agents (namely agents with anti-wear effect regarding mechanical factors such as abrasion, tearing, cutting) are carbon black, kaolin and calcined kaolin, silica and fused silica, precipitated silica, silicon dioxide, barium sulphate, calcium carbonate and talc.

Examples of colouring agents are chromium oxide (iii), titanium dioxides (anatase or rutile), iron oxides (red and yellow) and phthalocyanine blue.

Examples of process adjuvant agents are poly(tetrafluoroethylene), magnesium oxide, zinc oxide, ammonium chloride, carnauba wax and polyethylene.

Examples of accelerating agents are tetraethylthiuram monosulphide or TMTM, 2,2'-dithiobis(benzothiazole) or MTBS, tetramethylthiuram disulphide or TMTD, n-cyclohexyl-2-benzothiazolesulfenamide and n-ter-butylbenzothiazole-2-sulfenamide, zinc dibutyldithiocarbamate or ZDBC.

Examples of inhibitor agents are benzoic acid and salicylic acid and derivatives of the phthalimides (such as, for example, cyclohexylthiophthalimide).

In a particular embodiment:
- said elastomer included in said composition is selected from the group consisting of NR;
- said compression moulding step or said injection moulding step is carried out in a time interval ranging from 60 to 180 seconds and at a moulding temperature ranging from 140 to 200°C, more preferably approximately 170°C;
- said post-vulcanization step is carried out in a time interval ranging from 1 to 3 hours, more preferably approximately 2 hours, and at a temperature ranging from 50 to 70°C, more preferably approximately 60°C.

In a particular embodiment:
- said elastomer included in said composition is selected from the group consisting of EPDM;
- said compression moulding step or said injection moulding step is carried out in a time interval ranging from 80 to 250 seconds and at a moulding temperature ranging from 160 to 210°C, more preferably approximately 190°C;
- said post-vulcanization step is carried out in a time interval ranging from 1 to 3 hours, more preferably approximately 2 hours, and at a temperature ranging from 90 to 110°C, more preferably approximately 100°C.

In a particular embodiment:
- said elastomer included in said composition is selected from the group consisting of FKM;
- said compression moulding step or said injection moulding step is carried out in a time interval ranging from 80 to 300 seconds and at a moulding temperature ranging from 160 to 210°C, more preferably approximately 190°C;
- said post-vulcanization step is carried out in a time interval ranging from 24 to 72 hours, more preferably approximately 48 hours, and at a temperature ranging from 90 to 110°C, more preferably approximately 100°C.

In a particular embodiment:
- said elastomer included in said composition is selected from the group consisting of NBR:
- said compression moulding step or said injection moulding step is carried out in a time interval ranging from 40 to 250 seconds and at a moulding temperature ranging from 160 to 210°C, more preferably approximately 190°C;
- said post-vulcanization step is carried out in a time interval ranging from 1 to 3 hours, more preferably approximately 2 hours, and at a temperature ranging from 90 to 110°C, more preferably approximately 100°C.

In a particular embodiment:
- said elastomer included in said composition is selected from the group consisting of VMQ;
- said compression moulding step or said injection moulding step is carried out in a time interval ranging from 40 to 280 seconds and at a moulding temperature ranging from 140 to 200°C, more preferably approximately 170°C;
- said post-vulcanization step is carried out in a time interval ranging from 24 to 72 hours, more preferably approximately 48 hours, and at a temperature ranging from 95 to 115°C, more preferably approximately 105°C.

In a particular embodiment:
- said elastomer included in said composition is selected from the group consisting of FFKM;
- said compression moulding step or said injection moulding step is carried out in a time interval ranging from 200 to 500 seconds and at a moulding temperature ranging from 160 to 210°C, more preferably approximately 180°C;
- said post-vulcanization step is carried out in a time interval ranging from 24 to 72 hours, more preferably approximately 48 hours, and at a temperature ranging from 100 to 120°C, more preferably approximately 110°C.

In a particular embodiment:
- said elastomer included in said composition is selected from the group consisting of IIR;
- said compression moulding step or said injection moulding step is carried out in a time interval ranging from 40 to 250 seconds and at a moulding temperature ranging from 160 to 210°C, more preferably approximately 190°C;
- said post-vulcanization step is carried out in a time interval ranging from 1 to 3 hours, more preferably approximately 2 hours, and at a temperature ranging from 90 to 110°C, more preferably approximately 100°C.

In a particular embodiment:
- said elastomer included in said composition is selected from the group consisting of HNBR;
- said compression moulding step or said injection moulding step is carried out in a time interval ranging from 40 to 250 seconds and at a moulding temperature ranging from 160 to 210°C, more preferably approximately 190°C;
- said post-vulcanization step is carried out in a time interval ranging from 6 to 10 hours, more preferably approximately 8 hours, and at a temperature ranging from 100 to 120°C, more preferably approximately 110°C.

As previously mentioned, said thermosetting elastomer can be used for producing teatcup liners for milking and/or extraction of milk from animals and/or humans. Said use would limit the risk of infection when the same milking equipment is used on several potentially infected animals.

Said thermosetting elastomer can also be used in the field of food packaging, more preferably for packaging eggs or for packaging poultry meat. Said use would limit the risk of infection and/or food-borne illnesses from infected food.

Said thermosetting elastomer can also be used in the field of non-food packaging or in the field of protection of objects for human use, for example for the production of cases, containers, covering elements and the like such as, for example, mobile phone covers or cases for electronic devices. Said thermosetting elastomer can also be used in other applications. For example, it can be applied in elements of machines for production plants or processing of food and/or pharmaceutical products, machines for drinking water treatment systems, or in plumbing systems for domestic or industrial use or in the sector of medical devices, in particular sealing elements or gaskets.

### EXAMPLE 1

In order to test its antimicrobial capability, a thermosetting elastomer was produced according to the present invention from the following composition (the reference compound is known as PRPFKM105FDA) :

| **COMPONENT** | **CAS No.** | **%** | **Function** |
|---|---|---|---|
| POLY(VINYLIDENE FLUORIDE-CO-HEXAFLUOROPROPYLENE) | 9011-17-0 | 50 -60 | Polymer |
| BARIUM SULPHATE | 7727-43-7 | 30 - 35 | Filler |
| CARBON BLACK | 1333-86-4 | 4 - 7 | Reinforcing filler |
| CALCIUM DIHYDROXIDE | 1305-62-0 | 2 - 5 | Activator |
| MAGNESIUM OXIDE | 1309-48-4 | 1 - 4 | Activator |
| BENZYLTRIPHENYLPHOSPHONIUM SALT WITH 4,4'-[2,2,2-TRIFLUORO-1-(TRIFLUOROMETHYL) ETHYLIDENE]BIS [PHENOL] (1:1) | 75768-65-9 | 0 - 3 | Vulcanizer |
| 4,4'-(HEXAFLUOROISOPROPYLIDENE) DIPHENOL | 1478-61-1 | 0 - 3 | Vulcanizer |
| POLY(TETRAFLUOROETHYLENE) | 9002-84-0 | 0 - 3 | Process adjuvant |
| CARNAUBA WAX | 8015-86-9 | 0 - 3 | Process adjuvant |
| POLYETHYLENE | 9002-88-4 | 0 - 3 | Process adjuvant |
| ANTIMICROBIAL ADDITIVE ACCORDING TO CLAIM 1 | - | 1 | Antimicrobial additive |

The load abatement test was carried out using a cell culture plate with 24 wells (016 mm, volume 1 mL). For improved handling, a rectangular section was sampled from which a disc was subsequently obtained having dimensions suitable for introduction into the above plate. Using sterile tweezers, each disc was deposited on the bottom of a well and covered with 1 mL of each bacterial suspension.

Bacterial species such as *Staphylococcus aureus* - ATCC 6538, *Streptococcus agalactiae -* ATCC 13813, *Escherichia coli* - ATCC 25922 and *Salmonella enteritidis* - ATCC 13076 were tested at two different concentrations: 10³ UFC/mL and 10⁴ UFC/mL.

The time-points analysed to obtain an indication of the abatement dynamics of the bacterial load were:
- T0: thermosetting elastomer-bacteria contact;
- T1: 5 minutes post-contact (PT);
- T2: 30 minutes PT;
- T3: 1 hour PT;
- T5: 6 hours PT;
- T6: 24 hours PT.

At each time-point a portion of microbial suspension (50µL) was appropriately diluted in sterile physiological solution (NaCl 0.9%) and seeded (50µL) in the plate with solid medium. After incubation at 37°C for 24 hours, the colonies were counted to obtain the starting load at each time-point.

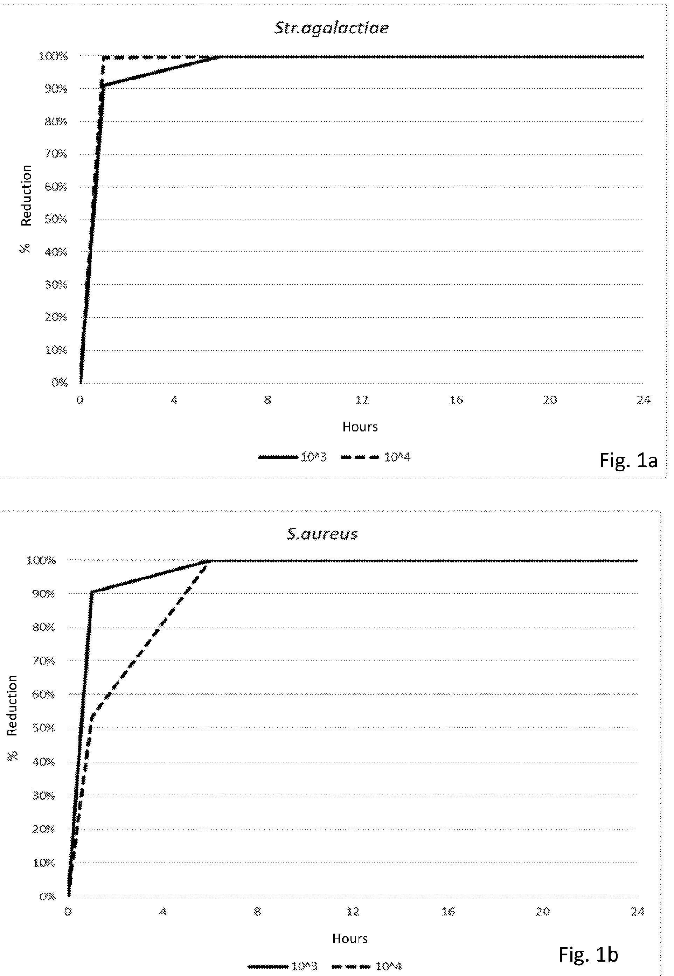

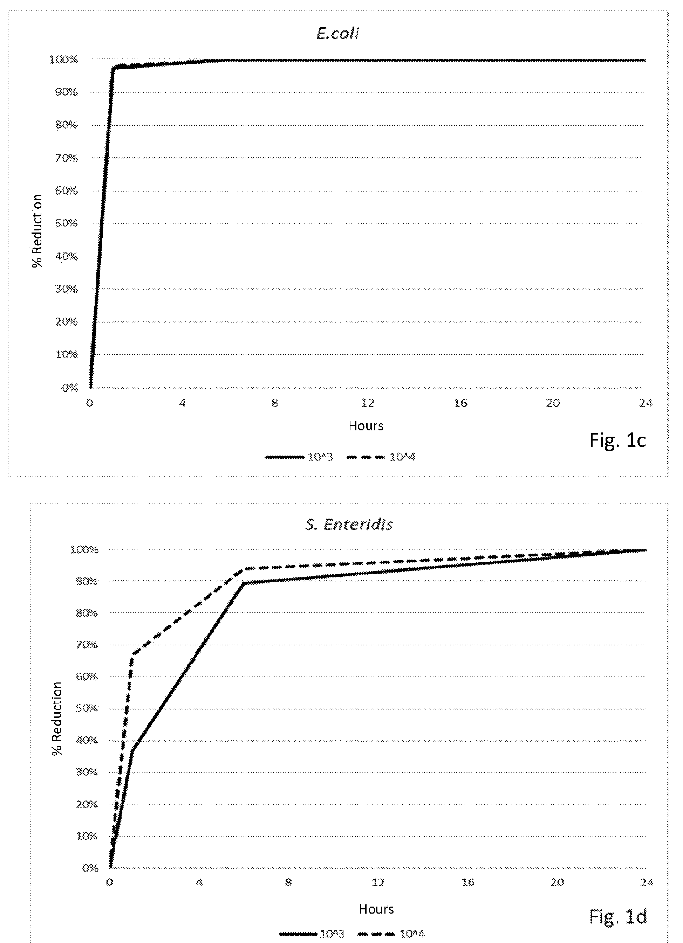

The experimental data obtained, reported in Figures 1a, 1b, 1c and 1d, show an antimicrobial activity that can be summarised as follows:
• *Str.agalactiae:* activity evident at 30 minutes and total abatement at 6h:

| **TIME** | **% Reduction Concentration 1x10³** | **% Reduction Concentration 1x10⁴** |
|---|---|---|
| **0** | 0% | 0% |
| **5 min** | 9% | 12% |
| **30 min** | 74% | 81% |
| **1 hour** | 91% | 99% |
| **6 hours** | 100% | 100% |
| **24 hours** | 100% | 100% |

• *S.aureus:* activity evident at 30 minutes and total abatement at 6h;

| **TIME** | **% Reduction Concentration 1x10³** | **% Reduction Concentration 1x10⁴** |
|---|---|---|
| **0** | 0% | 0% |
| **5 min** | 9% | 2% |
| **30 min** | 50% | 25% |
| **1 hour** | 90% | 53% |
| **6 hours** | 100% | 100% |
| **24 hours** | 100% | 100% |

• *E.coli:* activity evident at 30 minutes and total abatement at 6 hours;

| **TIME** | **% Reduction Concentration 1x10³** | **% Reduction Concentration 1x10⁴** |
|---|---|---|
| **0** | 0% | 0% |
| **5 min** | 14% | 16% |
| **30 min** | 66% | 67% |
| **1 hour** | 98% | 98% |
| **6 hours** | 100% | 100% |
| **24 hours** | 100% | 100% |

• *S. enteritidis:* activity evident at 1h and total abatement at 24h.

| **TIME** | **% Reduction Concentration 1x10³** | **% Reduction Concentration 1x10⁴** |
|---|---|---|
| **0** | 0% | 0% |
| **5 min** | 8% | 10% |
| **30 min** | 16% | 20% |
| **1 hour** | 37% | 67% |
| **6 hours** | 89% | 94% |
| **24 hours** | 100% | 100% |

### EXAMPLE 2

A thermosetting elastomer was produced as previously described starting from the following composition (the reference compound is known as PRPEPDM105FDA):

| **COMPONENT** | **CAS No.** | **%** | **Function** |
|---|---|---|---|
| EPDM | 25038-36-2 | 44 - 54 | Polymer |
| CARBON BLACK | 1333-86-4 | 20 - 30 | Reinforcing filler |
| MINERAL OIL | 8042 -47-5 | 7 - 12 | Plasticizer |
| CALCIUM CARBONATE | 471-34-1 | 7 - 12 | Filler |
| ZINC OXIDE | 1314-13-2 | 0.5 - 2.5 | Activator |
| 2,5-DIMETHYL-2,5-DI(TERT-BUTYLPEROXY) HEXANE | 78-63-7 | 1 .5 - 3.5 | Vulcanizer |
| PROPYLIDENE TRIMETHYL TRIMETHACRYLATE | 3290-92-4 | 0.5 - 2 | Vulcanizer |
| SULPHUR | 7704-34-9 | 0.1 - 1.5 | Vulcanizer |
| ANTIMICROBIAL ADDITIVE ACCORDING TO CLAIM 1 | - | 1 | Antimicrobial additive |

Applying the same analysis conditions as in Example 1, five bacterial species were tested (*Staphylococcus aureus* - ATCC 6538, *Streptococcus agalactiae* - ATCC 13813, *Escherichia coli* - ATCC 25922, *Listeria monocytogenes* ATCC 13932, *Legionella pneumophila* ATCC 33152) at two different concentrations: 10³ UFC/mL and 10⁴ UFC/mL.

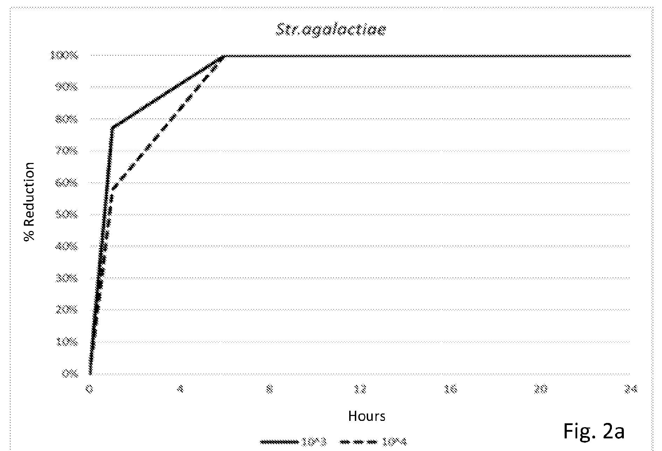

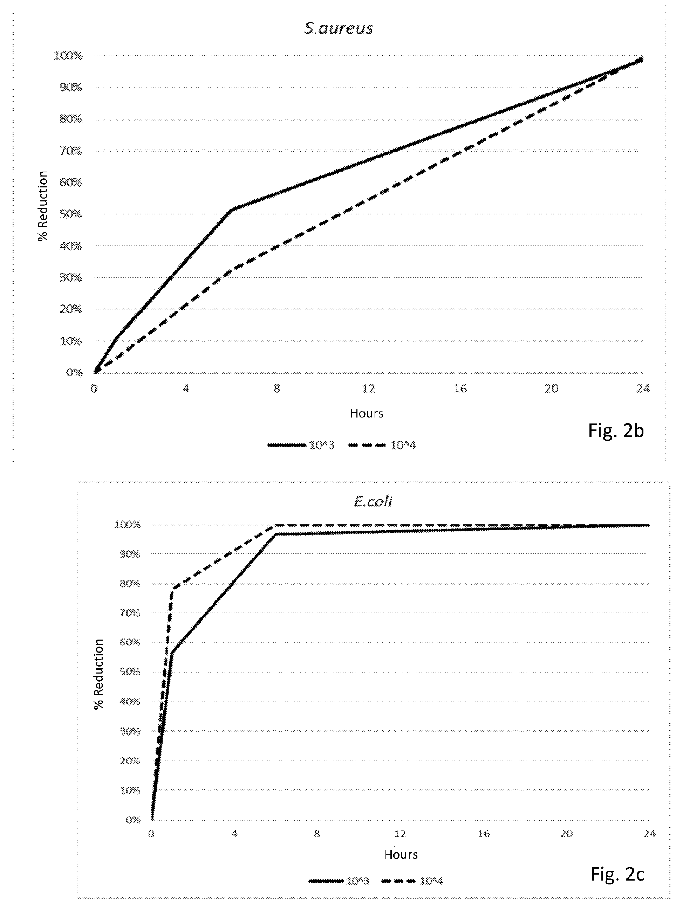

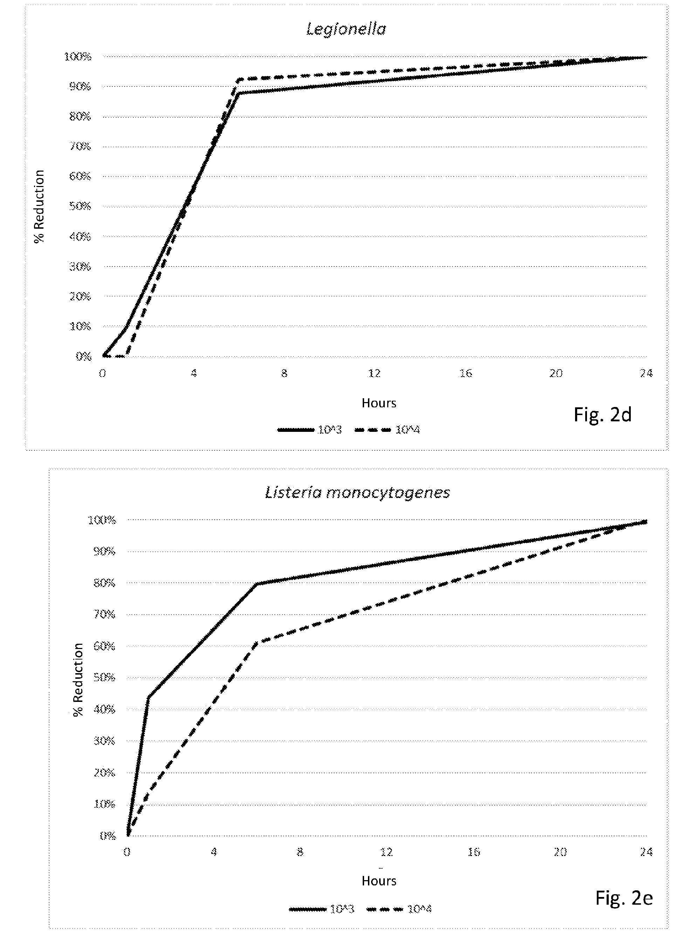

The experimental data obtained, reported in Figures 2a, 2b, 2c, 2d and 2e, show an antimicrobial activity that can be summarised as follows:
• Str.agalactiae: activity evident at 30 minutes and total abatement at 6h;

| **TIME** | **% Reduction Concentration 1x10³** | **% Reduction Concentration 1x10⁴** |
|---|---|---|
| **0** | 0% | 0% |
| **5 min** | 6% | 6% |
| **30 min** | 38% | 31% |
| **1 hour** | 77% | 58% |
| **6 hours** | 100% | 100% |
| **24 hours** | 100% | 100% |

• *S.aureus:* activity evident at 6h and total abatement not reached at 24h;

| **TIME** | **% Reduction Concentration 1x10³** | **% Reduction Concentration 1x10⁴** |
|---|---|---|
| **0** | 0% | 0% |
| **5 min** | 1.5% | 0.2% |
| **30 min** | 5 % | 2.2 |
| **1 hour** | 11% | 5% |
| **6 hours** | 51% | 32% |
| **24 hours** | 99% | 99% |

• *E.coli*:
∘ 10³ UFC/mL: activity evident after 30 minutes and total abatement at 24h;
∘ 10⁴ UFC/mL: activity evident after 30 minutes and total abatement at 6h.

| **TIME** | **% Reduction Concentration 1x10³** | **% Reduction Concentration 1x10⁴** |
|---|---|---|
| **0** | 0% | 0% |
| **5 min** | 6% | 9% |
| **30 min** | 27% | 42% |
| **1 hour** | 57% | 78% |
| **6 hours** | 97% | 100% |
| **24 hours** | 100% | 100% |

• *Legionella pneumophila:* activity evident at 6h and total abatement at 24h;

| **TIME** | **% Reduction Concentration 1x10³** | **% Reduction Concentration 1x10⁴** |
|---|---|---|
| **0** | 0% | 0% |
| **5 min** | 1% | 0% |
| **30 min** | 5% | 0% |
| **1 hour** | 9% | 0% |
| **6 hours** | 88% | 92% |
| **24 hours** | 100% | 100% |

• *Listeria monocytogenes:* total abatement reached at 24h with 10⁴ UFC/mL;

| **TIME** | **% Reduction Concentration 1x10³** | **% Reduction Concentration 1x10⁴** |
|---|---|---|
| **0** | 0% | 0% |
| **5 min** | 4% | 1% |
| **30 min** | 23% | 7% |
| **1 hour** | 44% | 14% |
| **6 hours** | 80% | 61% |
| **24 hours** | 99% | 100% |

### EXAMPLE 3

A thermosetting elastomer was produced as previously described starting from the following composition (the reference compound is known as PRPNBR105FDA):

| **COMPONENT** | **CAS No.** | **%** | **Function** |
|---|---|---|---|
| NBR | 9003-18-3 | 40 - 50 | Polymer |
| CARBON BLACK | 1333-86-4 | 19 - 29 | Reinforcing filler |
| MINERAL OIL | 103-23-1 | 5.5 - 8.5 | Plasticizer |
| CALCIUM CARBONATE | 471-34-1 | 11.5 - 16.5 | Filler |
| ZINC OXIDE | 1314-13-2 | 1 - 2 | Activator |
| 4-4' DITHIODIMORPHOLINE | 103-34-4 | 0.1 - 3 | Vulcanizer |
| TETRAMETHYLTHIURAM DISULPHIDE | 137-26-8 | 0.1 - 3 | Accelerant |
| 2,2'-METHYLENE-BIS-(4-METHYL-6-TERT-BUTYL-PHENOL) | 119-47-1 | 0.1 - 2 | Antioxidant |
| SULPHUR | 7704-34-9 | 0.1 - 2 | Vulcanizer |
| N-CYCLOHEXYL-2- | 95-33-0 | 0.1 - 3 | Accelerant |
| BENZOTHIAZOLESULFENAMIDE | | | |
| ANTIMICROBIAL ADDITIVE ACCORDING TO CLAIM 1 | - | 1 | Antimicrobial additive |

Applying the same analysis conditions as in Example 1, four bacterial species were tested (*Staphylococcus aureus* - ATCC 6538, *Streptococcus agalactiae -* ATCC 13813, *Escherichia coli* - ATCC 25922 and *Salmonella enteritidis* - ATCC 13076) at two different concentrations : 10³ UFC/mL and 10⁴ UFC/mL.

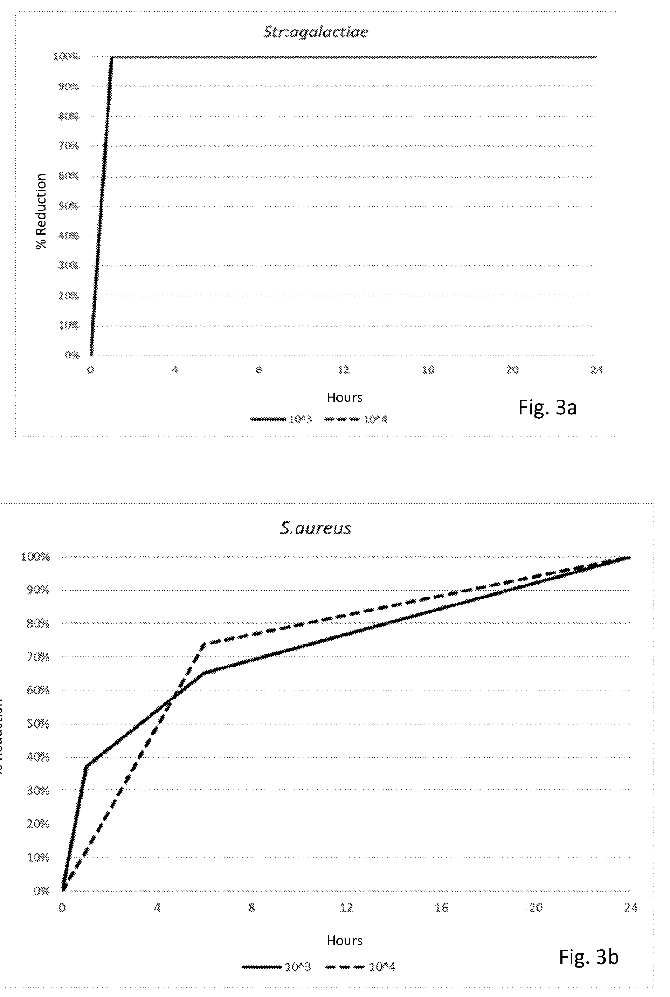

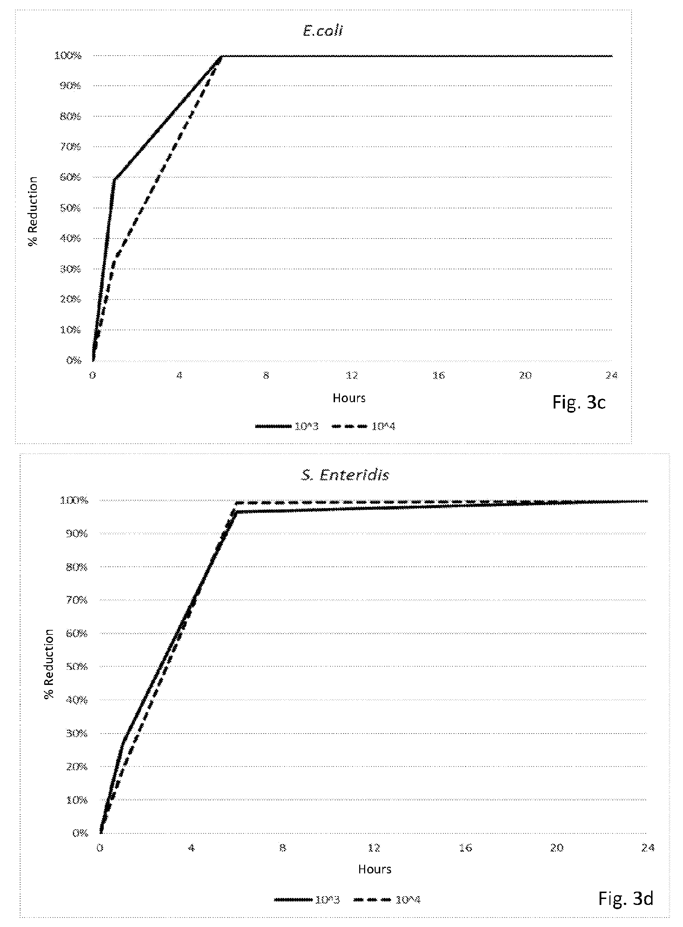

The experimental data obtained, reported in Figures 3a-3d, show an antimicrobial activity that can be summarised as follows:
• *Str.agalactiae* activity evident after 5 minutes and total abatement at 1h;

| **TIME** | **% Reduction Concentration 1x10³** | **% Reduction Concentration 1x10⁴** |
|---|---|---|
| **0** | 0% | 0% |
| **5 min** | 35% | 55% |
| **30 min** | 80% | 90% |
| **1 hour** | 100% | 100% |
| **6 hours** | 100% | 100% |
| **24 hours** | 100% | 100% |

• *S.aureus:*
∘ 10³ UFC/mL: activity evident after 1h and total abatement at 24h;
∘ 10⁴ UFC/mL: activity evident after 6h and total abatement at 24h.

| **TIME** | **% Reduction Concentration 1x10³** | **% Reduction Concentration 1x10⁴** |
|---|---|---|
| **0** | 0% | 0% |
| **5 min** | 3% | 1% |
| **30 min** | 19% | 6% |
| **1 hour** | 37% | 12% |
| **6 hours** | 65% | 74% |
| **24 hours** | 100% | 100% |

• *E.coli:*
∘ 10³ UFC/mL: activity evident after 30 minutes and total abatement at 6h;
∘ 10⁴ UFC/mL: activity evident after 1h and total abatement at 6h.

| **TIME** | **% Reduction Concentration 1x10³** | **% Reduction Concentration 1x10⁴** |
|---|---|---|
| **0** | 0% | 0% |
| **5 min** | 8% | 0.6% |
| **30 min** | 32% | 13% |
| **1 hour** | 59% | 33% |
| **6 hours** | 100% | 100% |
| **24 hours** | 100% | 100% |

• *S. enteritidis:*
∘ 10³ UFC/mL: activity evident after 1h and total abatement at 24h;
∘ 10⁴ UFC/mL: activity evident after 6h and total abatement at 24h.

| **TIME** | **% Reduction Concentration 1x10³** | **% Reduction Concentration 1x10⁴** |
|---|---|---|
| **0** | 0% | 0% |
| **5 min** | 9% | 8% |
| **30 min** | 12% | 10% |
| **1 hour** | 27% | 19% |
| **6 hours** | 96% | 99% |
| **24 hours** | 100% | 100% |

### EXAMPLE 4

A thermosetting elastomer was produced as previously described starting from the following composition (the reference compound is known as PRPHNBR105FDA):

| **COMPONENT** | **CAS No.** | **%** | **Function** |
|---|---|---|---|
| HNBR | 88254-10-8 | 36-42 | Polymer |
| CARBON BLACK | 1333-86-4 | 5-10 | Reinforcing filler |
| CALCINED KAOLIN | 92704-41-1 | 22-27 | Reinforcing filler |
| PRECIPITATED SILICA | 112926-00-8 | 5-10 | Reinforcing filler |
| MAGNESIUM OXIDE | 1309-48-04 | 0-2 | Process adjuvant |
| ZINC OXIDE | 1314-13-2 | 0-2 | Activator |
| STEARIC ACID | 57-11-4 | 0-1 | Activator |
| 6,6'-DI-TER-BUTYL-2,2'-METHYLENEDI-P-CRESOL | 119-47-1 | 0 - 1 | Antioxidant |
| BIS (TER-BUTYLDIOXYISOPROPYL) BENZENE | 25155-25-3 | 1-4 | Vulcanizer |
| ANTIMICROBIAL ADDITIVE ACCORDING TO CLAIM 1 | - | 1 | Antimicrobial additive |

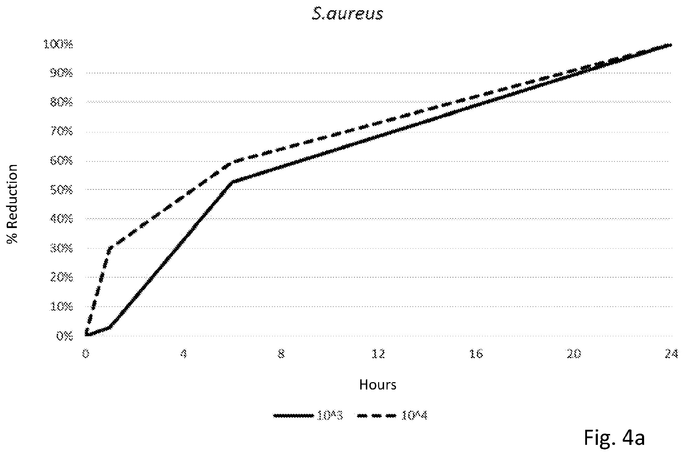

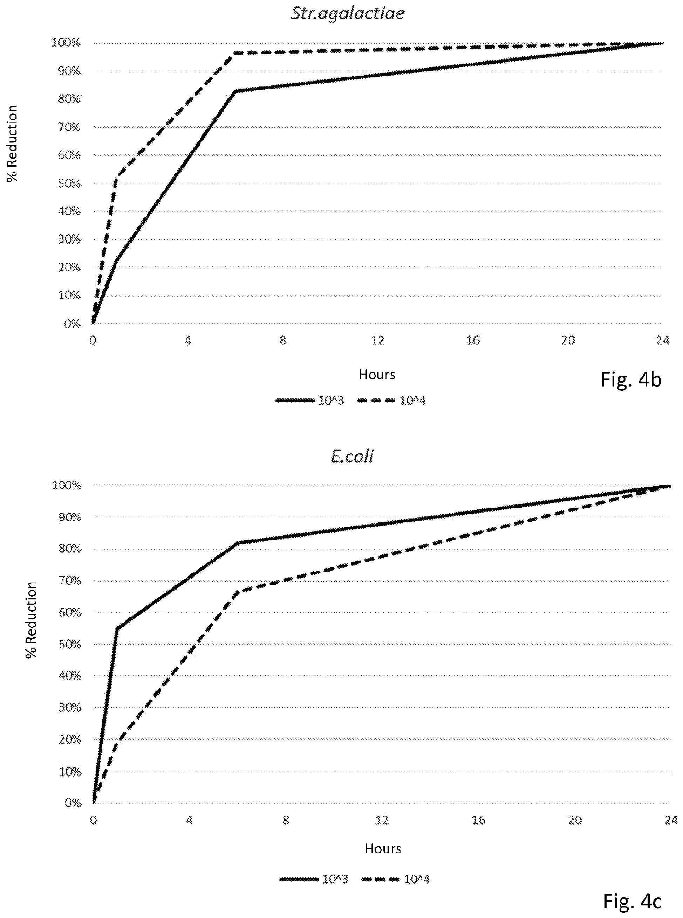

Applying the same analysis conditions as in Example 1, three bacterial species were tested (*S.aureus* - ATCC 6538, *Streptococcus agalactiae* - ATCC 13813, *Escherichia coli* - ATCC 25922) at two different concentrations: 10³ UFC/mL and 10⁴ UFC/mL. The experimental data obtained, reported in Figures 4a-4c, show an antimicrobial activity that can be summarised as follows:
• *S.aureus:* total abatement at 24h;

| **TIME** | **% Reduction Concentration 1x10³** | **% Reduction Concentration 1x10⁴** |
|---|---|---|
| **0** | 0% | 0% |
| **5 min** | 0% | 3% |
| **30 min** | 2% | 15% |
| **1 hour** | 3% | 30% |
| **6 hours** | 53% | 60% |
| **24 hours** | 100% | 100% |

• *Str. agalactiae:*
∘ 10³ UFC/mL: total abatement at 24h;
∘ 10⁴ UFC/mL: total abatement at 24h.

| **TIME** | **% Reduction Concentration 1x10³** | **% Reduction Concentration 1x10⁴** |
|---|---|---|
| **0** | 0% | 0% |
| **5 min** | 2% | 5% |
| **30 min** | 11% | 26% |
| **1 hour** | 22% | 52% |
| **6 hours** | 83% | 96% |
| **24 hours** | 100% | 100% |

• *E.coli:*
∘ 10³ UFC/mL: total abatement at 24h;
∘ 10⁴ UFC/mL: total abatement at 24h.

| **TIME** | **% Reduction Concentration 1x10³** | **% Reduction Concentration 1x10⁴** |
|---|---|---|
| **0** | 0% | 0% |
| **5 min** | 5% | 1% |
| **30 min** | 27% | 10% |
| **1 hour** | 95% | 19% |
| **6 hours** | 82% | 67% |
| **24 hours** | 100% | 100% |

### EXAMPLE 5

A thermosetting elastomer was produced as previously described from the following composition (the reference compound is known as PRPNR105FDA):

| **COMPONENT** | **CAS No.** | **%** | **Function** |
|---|---|---|---|
| NR | 9006-04-6 | 27 - 37 | Polymer |
| BR | 9003-17-2 | 12 - 17 | Polymer |
| CARBON BLACK | 1333-86-4 | 3 - 6 | Reinforcing filler |
| MINERAL OIL | 8042-47-5 | 6 - 9 | Plasticizer |
| SILICA | 7631-86-9 | 23 - 33 | Reinforcing filler |
| [3-(2,3-EPOXYPROPOXY)-PROPYL]-TRIMETHOXY SILANE | 2530-83-8 | 0.1 - 5 | Activator |
| ZINC CARBONATE | 51839-25-9 | 0.1 - 3 | Activator |
| N-TER-BUTYLBENZOTHIAZOLE-2-SULFENAMIDE | 95-31-8 | 0.1 - 3 | Accelerator |
| STYRENATED PHENOL | 61788-44-1 | 0.1 - 3 | Antioxidant |
| SULPHUR | 7704-34-9 | 0.1 - 3 | Vulcanizer |
| N-CYCLOHEXYL-2-BENZOTHIAZOLESULFENAMIDE | 95-33-0 | 0.1 - 3 | Accelerator |
| ANTIMICROBIAL ADDITIVE ACCORDING TO CLAIM 1 | - | 1 | Antimicrobial additive |

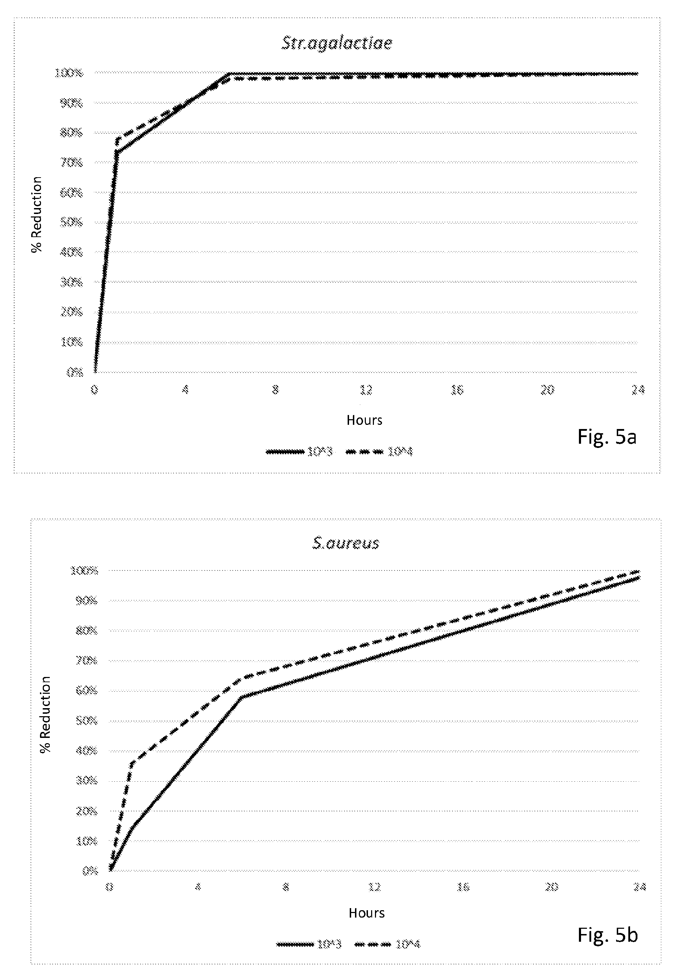

Applying the same analysis conditions as in Example 1, two bacterial species were tested (*Staphylococcus aureus* - ATCC 6538 and *Streptococcus agalactiae* - ATCC 13813) at two different concentrations: 10³ UFC/mL and 10⁴ UFC/mL. The experimental data obtained, reported in Figures 5a and 5b, show an antimicrobial activity that can be summarised as follows:
• *Str.agalactiae:*
∘ 10³ UFC/mL: activity evident at 30 minutes and total abatement at 6h;
∘ 10⁴ UFC/mL: activity evident at 30 minutes and total abatement at 24h;

| **TIME** | **% Reduction Concentration 1x10³** | **% Reduction Concentration 1x10⁴** |
|---|---|---|
| **0** | 0% | 0% |
| **5 min** | 7% | 6% |
| **30 min** | 31% | 33% |
| **1 hour** | 73% | 78% |
| **6 hours** | 100% | 98% |
| **24 hours** | 100% | 100% |

• *S.aureus:*
∘ 10³ UFC/mL: activity evident after 6h, total abatement not reached at 24h;
∘ 10⁴ UFC/mL: activity evident after 1h and total abatement at 24h.

| **TIME** | **% Reduction Concentration 1x10³** | **% Reduction Concentration 1x10⁴** |
|---|---|---|
| **0** | 0% | 0% |
| **5 min** | 0.2% | 3% |
| **30 min** | 7% | 21% |
| **1 hour** | 14% | 36% |
| **6 hours** | 58% | 64% |
| **24 hours** | 98% | 100% |

### EXAMPLE 6

A thermosetting elastomer was produced as previously described from the following composition (the reference compound is known as PRPVMQ105FDA):

| **COMPOMENT** | **CAS No.** | **%** | **Function** |
|---|---|---|---|
| SILICON RUBBER | 63394-02-5 | 98.8 - 99.7 | Polymer |
| 2,5-DIMETHYL-2,5-DI(TER-BUTYLPEROXY) HEXANE | 78-63-7 | 0.3 - 1.2 | Catalyst |
| ANTIMICROBIAL ADDITIVE ACCORDING TO CLAIM 1 | - | 1 | Antimicrobial additive |

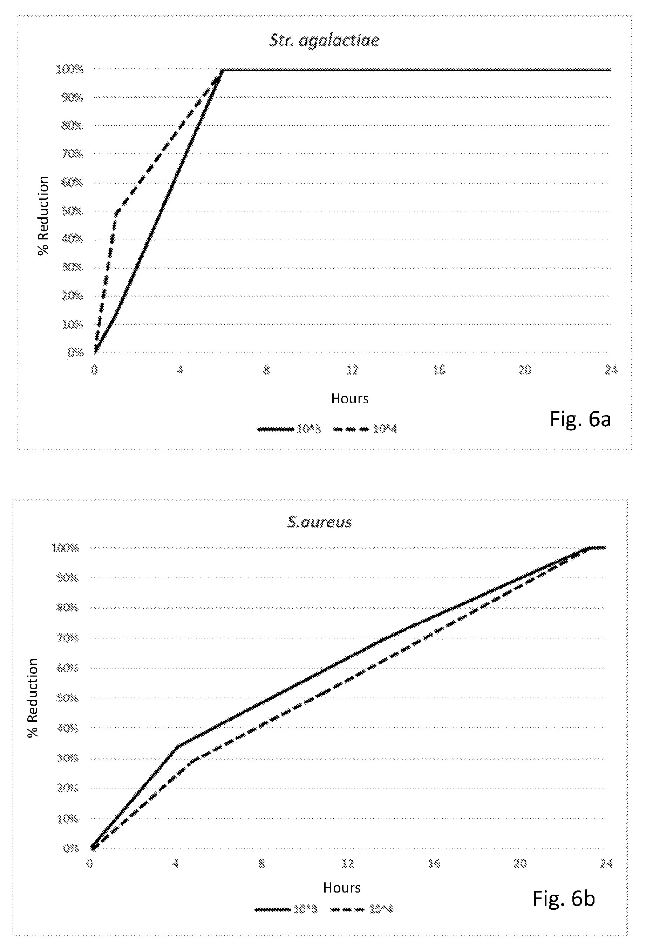

Applying the same analysis conditions as in Example 1, two bacterial species were tested (*Staphylococcus aureus* - ATCC 6538 and *Streptococcus agalactiae* - ATCC 13813) at two different concentrations: 10³ UFC/mL and 10⁴ UFC/mL. The experimental data obtained, reported in Figures 6a and 6b, show an antimicrobial activity that can be summarised as follows:
• *Str.agalactiae:* total abatement at 6h;

| **TIME** | **% Reduction Concentration 1x10³** | **% Reduction Concentration 1x10⁴** |
|---|---|---|
| **0** | 0% | 0% |
| **5 min** | 1% | 2% |
| **30 min** | 5% | 8% |
| **1 hour** | 7% | 12% |
| **6 hours** | 100% | 100% |
| **24 hours** | 100% | 100% |

• *S.aureus:* activity evident at 6h and total abatement at 24h.

| **TIME** | **% Reduction Concentration 1x10³** | **% Reduction Concentration 1x10⁴** |
|---|---|---|
| **0** | 0% | 0% |
| **5 min** | 3% | 2% |
| **30 min** | 10% | 6% |
| **1 hour** | 20% | 10% |
| **6 hours** | 49% | 35% |
| **24 hours** | 100% | 100% |

### EXAMPLE 7

A thermosetting elastomer was produced as previously described from the following composition (the reference compound is known as PRPVMQ105FDA-V1):

| **COMPONENT** | **CAS No.** | **%** | **Function** |
|---|---|---|---|
| SILICONE RUBBER | 63394-02-5 | 95-99 | Polymer |
| ZINC OXIDE | 1314-13-2 | 1-5 | Process adjuvant |
| MAGNESIUM OXIDE | 1309-48-4 | 1-5 | Process adjuvant |
| 2,5-DIMETHYL-2,5-DI(TER-BUTYLPEROXY) HEXANE | 78-63-7 | 0.3 - 1.2 | Catalyst |
| ANTIMICROBIAL ADDITIVE ACCORDING TO CLAIM 1 | - | 1 | Antimicrobial additive |

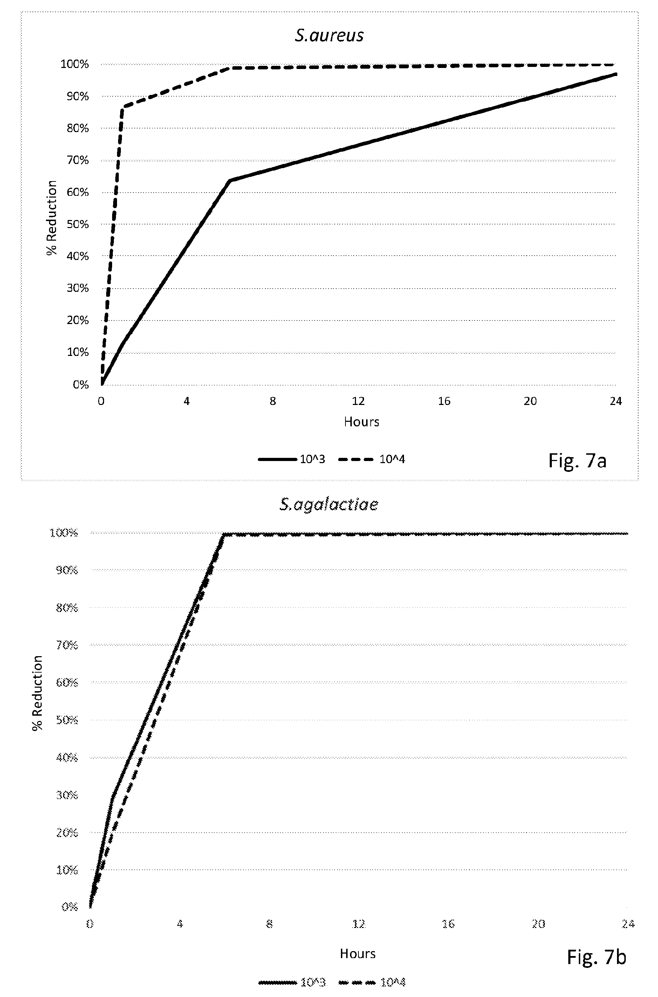

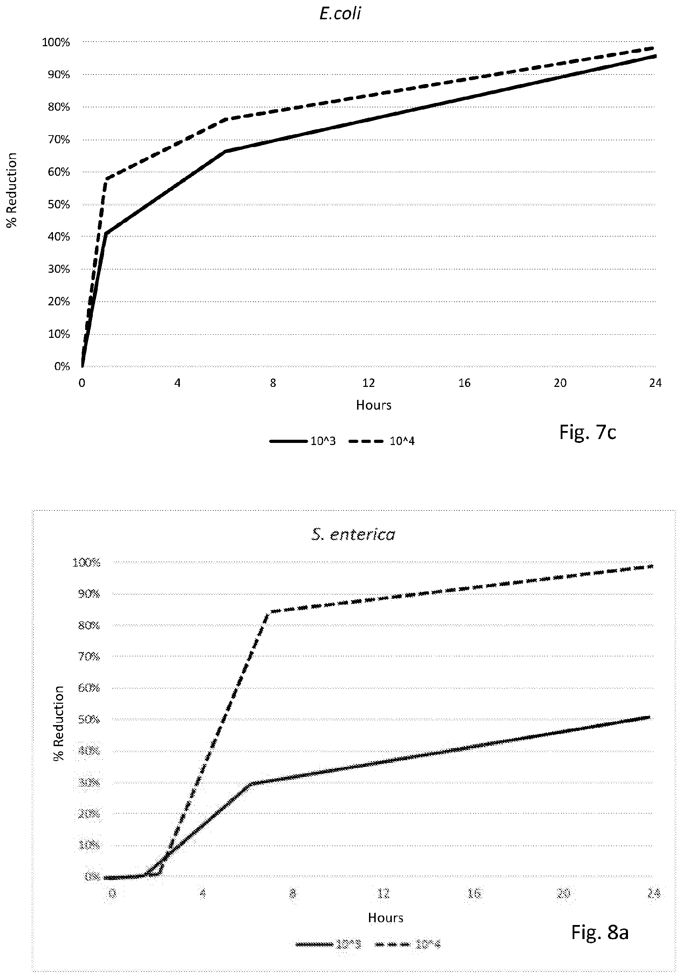

Applying the same analysis conditions as in Example 1, three bacterial species were tested (*Staphylococcus aureus* - ATCC 6538, *Streptococcus agalactiae* - ATCC 13813 and *Escherichia coli -* ATCC 25922) at two different concentrations: 10³ UFC/mL and 10⁴ UFC/mL. The experimental data obtained, reported in Figures 7a, 7b and 7c, show an antimicrobial activity that can be summarised as follows:
• *S.aureus:* activity evident and total abatement at 24h.

| **TIME** | **% Reduction Concentration 1x10³** | **% Reduction Concentration 1x10⁴** |
|---|---|---|
| **0** | 0% | 0% |
| **5 min** | 1% | 7% |
| **30 min** | 6% | 44% |
| **1 hour** | 12% | 87% |
| **6 hours** | 64% | 99% |
| **24 hours** | 97% | 100% |

• *Str.agalactiae:* total abatement at 6 and 24h;

| **TIME** | **% Reduction Concentration 1x10³** | **% Reduction Concentration 1x10⁴** |
|---|---|---|
| **0** | 0% | 0% |
| **5 min** | 3% | 2% |
| **30 min** | 15% | 10% |
| **1 hour** | 29% | 20% |
| **6 hours** | 100% | 99% |
| **24 hours** | 100% | 100% |

• *E.Coli:* abatement evident at 24h;

| **TIME** | **% Reduction Concentration 1x10³** | **% Reduction Concentration 1x10⁴** |
|---|---|---|
| **0** | 0% | 0% |
| **5 min** | 3% | 5% |
| **30 min** | 20% | 29% |
| **1 hour** | 41% | 58% |
| **6 hours** | 66% | 76% |
| **24 hours** | 96% | 98% |

### EXAMPLE 8

A thermosetting elastomer was produced as previously described from the following composition (the reference compound is known as PRPVMQ105FDA-V3):

| **COMPONENT** | **CAS No.** | **%** | **Function** |
|---|---|---|---|
| SILICONE RUBBER | 63394-02-5 | 93-96 | Polymer |
| ZINC OXIDE | 1314-13-2 | 1-5 | Process adjuvant |
| MAGNESIUM OXIDE | 1309-48-4 | 1-5 | Process adjuvant |
| AMMONIUM CHLORIDE | 12125-02-09 | 1-5 | Process adjuvant |
| 2,5-DIMETHYL-2,5-DI(TER- | 78-63-7 | 0.3 - 1.2 | Catalyst |
| BUTYLPEROXY) HEXANE | | | |
| ANTIMICROBIAL ADDITIVE ACCORDING TO CLAIM 1 | - | 1 | Antimicrobial additive |

Applying the same analysis conditions as in Example 1, S. enterica was tested at two different concentrations: 103 UFC/mL and 104 UFC/mL. Effects on the cyanobacteria *Limnothrix sp.* and *Phormidium* were also tested. The tests on the antibacterial effect on the cyanobacteria were conducted by evaluation, in terms of growth inhibition, on solid medium. The test was carried out by growing the two cyanobacteria on a solid support, to simulate a condition of undesired growth of cyanobacteria on surfaces of receptacles or pipes with stagnant water. The solid surface was prepared with a standard culture medium used for the growth of cyanobacteria (BG11) with the addition of 1%, by volume, of agar to solidify. After appropriate sterilization, the cyanobacteria were inoculated in a Petri dish a few days prior to the beginning of the test. The dishes were then placed in a culture chamber set to 20 ± 1°C, with light intensity of 90-120 µmol m-2 s-1, following a photoperiod of 16:8 hours of light:darkness. After addition of the elastomer, the dishes were tested.

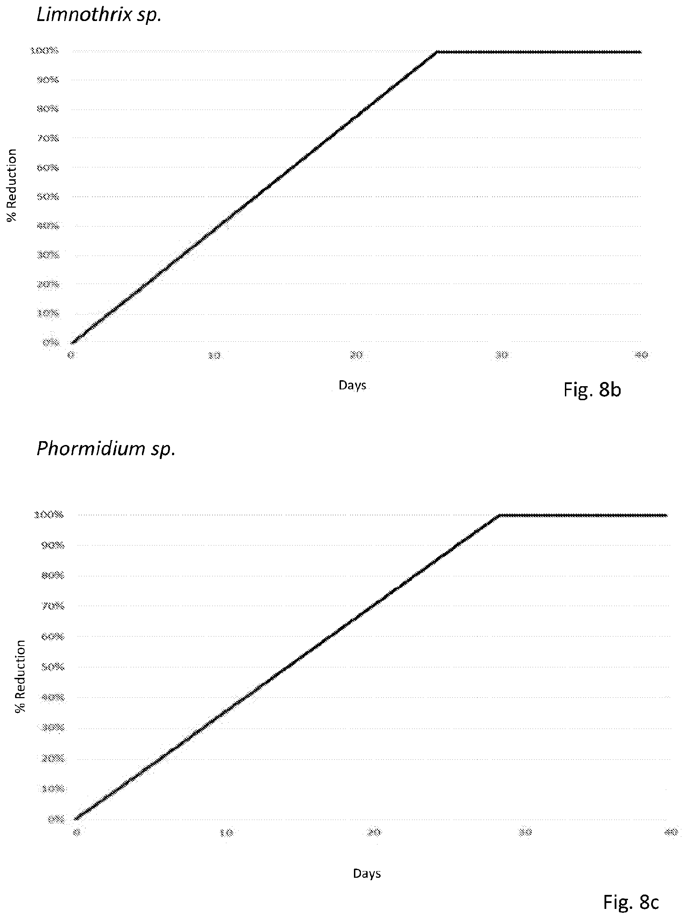

The experimental data obtained, reported in Figures 8a, 8b and 8c, show an antimicrobial activity that can be summarised as follows:
• *S.enterica:* 10⁴ UFC/Ml: total abatement at 24h.

| **TIME** | **% Reduction Concentration 1x10³** | **% Reduction Concentration 1x10⁴** |
|---|---|---|
| **0** | 0% | 0% |
| **5 min** | 0% | 0% |
| **30 min** | 0% | 0% |
| **1 hour** | 0% | 0% |
| **6 hours** | 30% | 85% |
| **24 hours** | 58% | 100% |

• *Limnothrix sp. (filament diameter <1.5* µ*m):* total abatement at 30 days;

| **TIME** | **% Concentration Reduction** |
|---|---|
| **0** | 0% |
| **10 days** | 40% |
| **20 days** | 80% |
| **30 days** | 100% |
| **40 days** | 100% |

• *Phormidium sp (filament diameter <5-6* µ*m)*.: total abatement at 30 days;

| **TIME** | **% Concentration Reduction** |
|---|---|
| **0** | 0% |
| **10 days** | 36% |
| **20 days** | 70% |
| **30 days** | 100% |
| **40 days** | 100% |

### EXAMPLE 9

A thermosetting elastomer was produced as previously described from the following composition (the reference compound is known as PRPBUT105FA):

| **COMPONENT** | **CAS No.** | **%** | **Function** |
|---|---|---|---|
| BUTYL RUBBER | 9010-85-9 | 54-57 | Polymer |
| CARBON BLACK | 1333-86-4 | 26-29 | Reinforcing filler |
| CALCIUM CARBONATE | 1317-65-3 | 9.5-11 | Filler |
| ZINC OXIDE | 1314-13-2 | 0.6-2 | Activator |
| STEARIC ACID | 57-11-4 | 0.1-1 | Activator |
| ZDEC | 14324-55-1 | 0.25-1 | Vulcanizer |
| TMTD | 137-26-8 | 0.4-1.8 | Vulcanizer |
| SULPHUR | 7704-34-9 | 0.1-2 | Vulcanizer |
| ANTIMICROBIAL ADDITIVE ACCORDING TO CLAIM 1 | - | 1 | Antimicrobial additive |

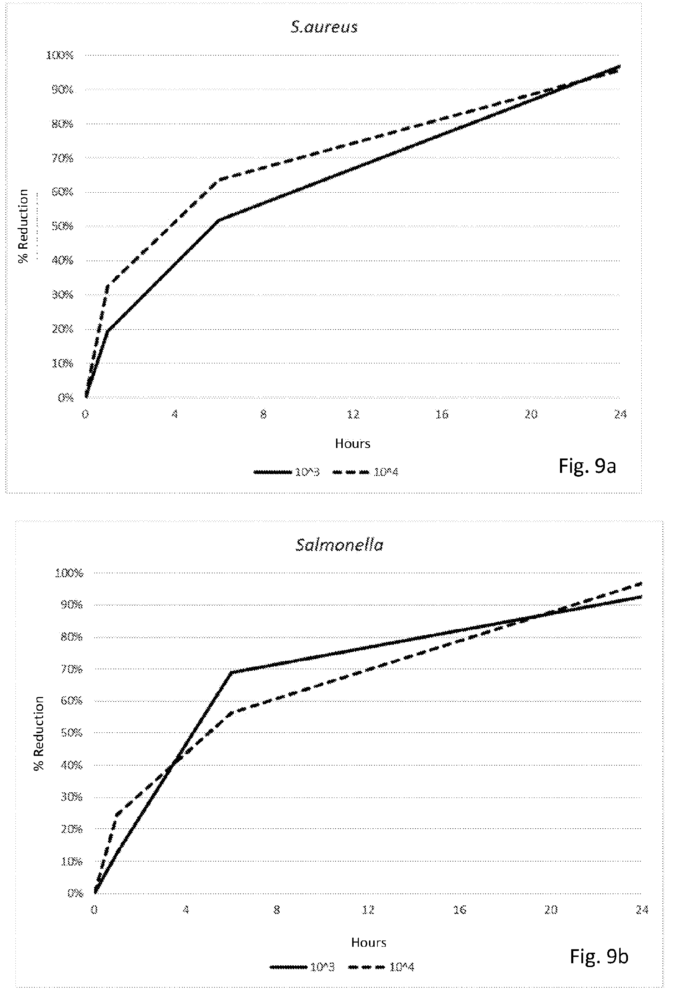

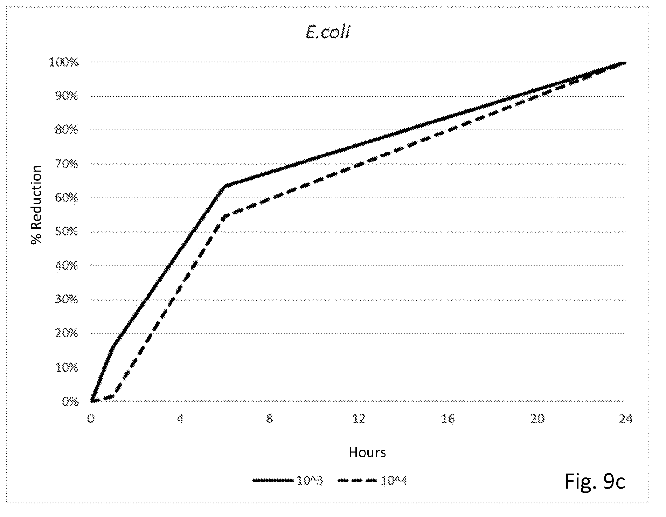

Applying the same analysis conditions as in Example 1, three bacterial species were tested (*Staphylococcus aureus* - ATCC 6538, *Salmonella* and *Escherichia coli* - ATCC 25922) at two different concentrations: 10³ UFC/mL and 10⁴ UFC/mL. The experimental data obtained, reported in Figures 9a, 9b and 9c, show an antimicrobial activity that can be summarised as follows:
• *S.aureus:* almost total abatement at 24h.

| **TIME** | **% Reduction Concentration 1x10³** | **% Reduction Concentration 1x10⁴** |
|---|---|---|
| **0** | 0% | 0% |
| **5 min** | 2% | 3% |
| **30 min** | 10% | 18% |
| **1 hour** | 19% | 33% |
| **6 hours** | 52% | 64% |
| **24 hours** | 97% | 96% |

• *Salmonella:* almost total abatement at 24h;

| **TIME** | **% Reduction Concentration 1x10³** | **% Reduction Concentration 1x10⁴** |
|---|---|---|
| **0** | 0% | 0% |
| **5 min** | 1% | 2% |
| **30 min** | 7% | 13% |
| **1 hour** | 13% | 25% |
| **6 hours** | 69% | 56% |
| **24 hours** | 93% | 97% |

• *E.Coli:* abatement at 24h;

| **TIME** | **% Reduction Concentration 1x10³** | **% Reduction Concentration 1x10⁴** |
|---|---|---|
| **0** | 0% | 0% |
| **5 min** | 2% | 0% |
| **30 min** | 8% | 1% |
| **1 hour** | 16% | 2% |
| **6 hours** | 63% | 55% |
| **24 hours** | 100% | 100% |

### EXAMPLE 10

A thermosetting elastomer was produced as previously described from the following composition (the reference compound is known as PRPFFKM102FDAP):

| **COMPONENT** | **CAS No.** | **%** | **Function** |
|---|---|---|---|
| PERFLUOROELASTOMER FFKM | 24625-79-6 | 70-90 | Polymer |
| CARBON BLACK | 1333-86-4 | 10-20 | Reinforcing filler |
| MAGNESIUM OXIDE | 1309-48-4 | 1-4 | Activator |
| ZINC OXIDE | 1314-13-2 | 1-4 | Activator |
| 1,3,5-TRIALLYL-1,3,5-TRIAZINE-2,4,6(1H,3H,5H,)-TRIONE | 1025-15-6 | 1-4 | Vulcanizer |
| 2,5-DIMETHYL-2,5-DI(TERT-BUTYLPEROXY) HEXANE | 78-63-7 | 0.1-2.5 | Vulcanizer |
| ANTIMICROBIAL ADDITIVE ACCORDING TO CLAIM 1 | - | 1 | Antimicrobial additive |

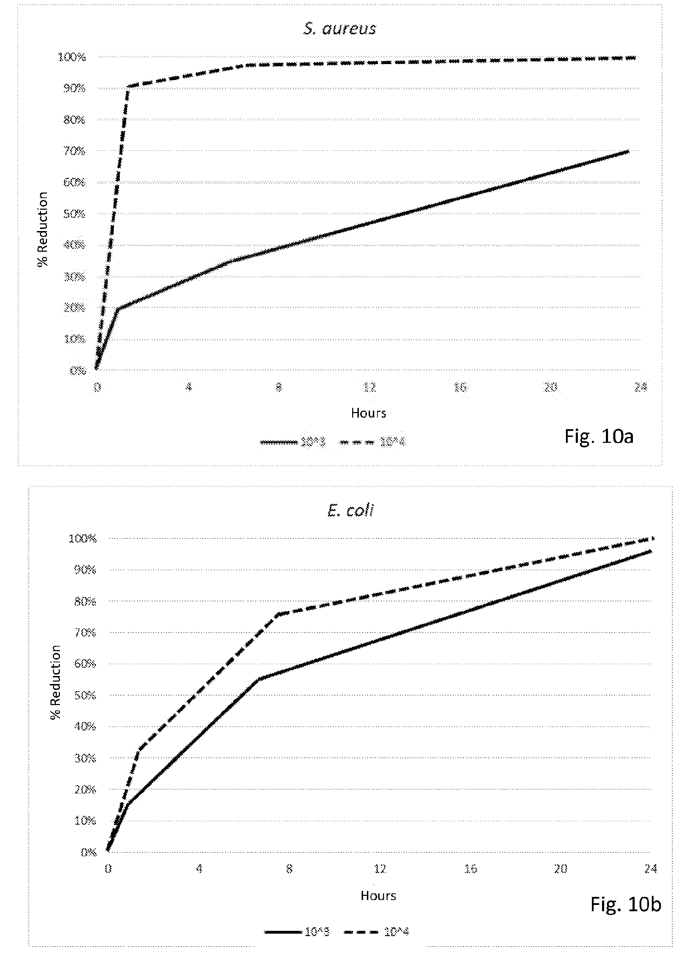

Applying the same analysis conditions as in Example 1, two bacterial species were tested (*Staphylococcus aureus* - ATCC 6538 and *Escherichia coli* - ATCC 25922) at two different concentrations: 10³ UFC/mL and 10⁴ UFC/mL. The experimental data obtained, reported in Figures 10a and 10b, show an antimicrobial activity that can be summarised as follows:
• *S.aureus:* total abatement at 24h.

| **TIME** | **% Reduction Concentration 1x10³** | **% Reduction Concentration 1x10⁴** |
|---|---|---|
| **0** | 0% | 0% |
| **5 min** | 2% | 8% |
| **30 min** | 10% | 46% |
| **1 hour** | 19% | 92% |
| **6 hours** | 35% | 97% |
| **24 hours** | 70% | 100% |

• *E.Coli:* almost total abatement at 24h;

| **TIME** | **% Reduction Concentration 1x10³** | **% Reduction Concentration 1x10⁴** |
|---|---|---|
| **0** | 0% | 0% |
| **5 min** | 1% | 3% |
| **30 min** | 8% | 16% |
| **1 hour** | 16% | 33% |
| **6 hours** | 55% | 77% |
| **24 hours** | 96% | 99% |

## Claims

1. A composition suitable for the production of a thermosetting elastomer with antimicrobial capabilities by means of vulcanization by moulding comprising:
• at least one elastomer, preferably selected from the group consisting of EPDM, VMQ, NBR, HNBR, NR, FKM, FFKM, BR and IIR;
• at least one catalyst and/or at least one vulcanization activator and
• an antimicrobial additive in a quantity varying from 0.5% to 5%, preferably approximately 1% by weight relative to the total weight of said composition and in turn comprising zinc pyrithione and silver phosphate glass in a 1:1 ratio by weight, preferably in a total quantity by weight relative to the total weight of said antimicrobial additive of at least 98%.

2. The composition according to claim 1, wherein said composition comprises one or more compounds selected from the group consisting of vulcanizers, plasticizers, antioxidants, fillers, reinforcers, colouring agents, process adjuvants, accelerators or inhibitors.

3. A thermosetting elastomer with antimicrobial capabilities obtained via a vulcanization process comprising:
• a compression moulding step or an injection moulding step of the composition according to one of the claims 1-2, and
• a post-vulcanization step.

4. The thermosetting elastomer according to claim 3 wherein:
• said elastomer comprised in said composition is selected from the group consisting of NR;
• said compression moulding step or said injection moulding step is carried out in a time interval ranging from 60 to 180 seconds and at a moulding temperature ranging from 140 to 200°C, more preferably approximately 170°C;
• said post-vulcanization step is carried out in a time interval ranging from 1 to 3 hours, more preferably approximately 2 hours, and at a temperature ranging from 50 to 70°C, more preferably approximately 60°C.

5. The thermosetting elastomer according to claim 3 wherein:
• said elastomer comprised in said composition is selected from the group consisting of EPDM;
• said compression moulding step or said injection moulding step is carried out in a time interval ranging from 80 to 250 seconds and at a moulding temperature ranging from 160 to 210°C, more preferably approximately 190°C;
• said post-vulcanization step is carried out in a time interval ranging from 1 to 3 hours, more preferably approximately 2 hours, and at a temperature ranging from 90 to 110°C, more preferably approximately 100°C.

6. The thermosetting elastomer according to claim 3 wherein:
• said elastomer comprised in said composition is selected from the group consisting of FKM;
• said compression moulding step or said injection moulding step is carried out in a time interval ranging from 80 to 300 seconds and at a moulding temperature ranging from 160 to 210°C, more preferably approximately 190°C;
• said post-vulcanization step is carried out in a time interval ranging from 24 to 72 hours, more preferably approximately 48 hours, and at a temperature ranging from 90 to 110°C, more preferably approximately 100°C.

7. The thermosetting elastomer according to claim 3 wherein:
• said elastomer comprised in said composition is selected from the group consisting of NBR:
• said compression moulding step or said injection moulding step is carried out in a time interval ranging from 40 to 250 seconds and at a moulding temperature ranging from 160 to 210°C, more preferably approximately 190°C;
• said post-vulcanization step is carried out in a time interval ranging from 1 to 3 hours, more preferably approximately 2 hours, and at a temperature ranging from 90 to 110°C, more preferably approximately 100°C.

8. The thermosetting elastomer according to claim 3 wherein:
• said elastomer comprised in said composition is selected from the group consisting of VMQ;
• said compression moulding step or said injection moulding step is carried out in a time interval ranging from 40 to 280 seconds and at a moulding temperature ranging from 140 to 200°C, more preferably approximately 170°C;
• said post-vulcanization step is carried out in a time interval ranging from 24 to 72 hours, more preferably approximately 48 hours, and at a temperature ranging from 95 to 115°C, more preferably approximately 105°C.

9. . The thermosetting elastomer according to claim 3 wherein:
• said elastomer comprised in said composition is selected from the group consisting of FFKM;
• said compression moulding step or said injection moulding step is carried out in a time interval ranging from 200 to 500 seconds and at a moulding temperature ranging from 160 to 210°C, more preferably approximately 180°C;
• said post-vulcanization step is carried out in a time interval ranging from 24 to 72 hours, more preferably approximately 48 hours, and at a temperature ranging from 100 to 120°C, more preferably approximately 110°C.

10. The thermosetting elastomer according to claim 3 wherein:
• said elastomer comprised in said composition is selected from the group consisting of IIR;
• said compression moulding step or said injection moulding step is carried out in a time interval ranging from 40 to 250 seconds and at a moulding temperature ranging from 160 to 210°C, more preferably approximately 190°C;
• said post-vulcanization step is carried out in a time interval ranging from 1 to 3 hours, more preferably approximately 2 hours, and at a temperature ranging from 90 to 110°C, more preferably approximately 100°C.

11. The thermosetting elastomer according to claim 3 wherein:
• said elastomer comprised in said composition is selected from the group consisting of HNBR;
• said compression moulding step or said injection moulding step is carried out in a time interval ranging from 40 and 250 seconds and at a moulding temperature ranging from 160 to 210°C, more preferably approximately 190°C;
• said post-vulcanization step is carried out in a time interval ranging from 6 to 10 hours, more preferably approximately 8 hours, and at a temperature ranging from 100 to 120°C, more preferably approximately 110°C.

12. Use of the thermosetting elastomer according to one of the claims 3-11 to produce teatcup liners for the milking and/or extraction of milk from animals and/or humans.

13. Use of the thermosetting elastomer according to one of the claims 3-11 in the field of food packaging, more preferably for the packaging of eggs or the packaging of poultry meat.

14. Use of the thermosetting elastomer according to one of the claims 3-11 in parts of machines for production plants or processing of foods and/or pharmaceutical products, machines for drinking water treatment systems or in the sector of medical devices, or in domestic or industrial plumbing systems, in particular seal elements or gaskets.

15. Use of the thermosetting elastomer according to one of the claims 3-11 to produce cases, containers, covering elements and the like.

## Patentansprüche

1. Zusammensetzung, die zur Herstellung eines wärmehärtbaren Elastomers mit antimikrobiellen Eigenschaften durch Vulkanisation durch Formgebung geeignet ist, umfassend:
• mindestens ein Elastomer, vorzugsweise ausgewählt aus der Gruppe, bestehend aus EPDM, VMQ, NBR, HNBR, NR, FKM, FFKM, BR und IIR;
• mindestens einen Katalysator und/oder mindestens einen Vulkanisationsaktivator und
• einen antimikrobiellen Additiv in einer Menge von 0,5 % bis 5 %, vorzugsweise etwa 1 % des Gesamtgewichts der Zusammensetzung, der wiederum Zinkpyrithion und Silberphosphatglas in einem Gewichtsverhältnis von 1:1 umfasst, vorzugsweise in einer Gesamtmenge, die mindestens 98 % des Gesamtgewichts des antimikrobiellen Additivs ausmacht.

2. Zusammensetzung nach Anspruch 1, wobei die Zusammensetzung eine oder mehrere Verbindungen umfasst, die aus der Gruppe ausgewählt sind, besteht aus Vulkanisatoren, Weichmachern, Antioxidantien, Füllstoffen, Verstärkungsmitteln, Farbstoffen, Prozesshilfsmitteln, Beschleunigern oder Inhibitoren.

3. Wärmehärtbares Elastomer mit antimikrobiellen Eigenschaften, erhalten durch einen Vulkanisationsprozess, umfassend:
• einen Formpressschritt oder einen Spritzformschritt der Zusammensetzung nach einem der Ansprüche 1 bis 2, und
• einen Schritt nach der Vulkanisierung.

4. Wärmehärtbares Elastomer nach Anspruch 3, wobei:
• das in der Zusammensetzung enthaltene Elastomer ausgewählt ist aus der Gruppe, bestehend aus NR;
• der Formpressschritt oder der Spritzgießschritt in einem Intervall von 60 bis 180 Sekunden und bei einer Formtemperatur von 140 bis 200 °C, vorzugsweise etwa 170 °C, durchgeführt wird;
• der Schritt nach der Vulkanisierung in einem Intervall von 1 bis 3 Stunden, vorzugsweise etwa 2 Stunden, und bei einer Temperatur von 50 bis 70 °C, vorzugsweise etwa 60 °C, durchgeführt wird.

5. Wärmehärtbares Elastomer nach Anspruch 3, wobei:
• das in der Zusammensetzung enthaltene Elastomer ausgewählt ist aus der Gruppe, bestehend aus EPDM;
• der Formpressschritt oder der Spritzgießschritt in einem Intervall von 80 bis 250 Sekunden und bei einer Formtemperatur von 160 bis 210 °C, vorzugsweise etwa 190 °C, durchgeführt wird;
• der Schritt nach der Vulkanisierung in einem Intervall von 1 bis 3 Stunden, vorzugsweise etwa 2 Stunden, und bei einer Temperatur von 90 bis 110 °C, vorzugsweise etwa 100 °C, durchgeführt wird.

6. Wärmehärtbares Elastomer nach Anspruch 3, wobei:
• das in der Zusammensetzung enthaltene Elastomer ausgewählt ist aus der Gruppe, bestehend aus FKM;
• der Formpressschritt oder der Spritzgießschritt in einem Intervall von 80 bis 300 Sekunden und bei einer Formtemperatur von 160 bis 210 °C, vorzugsweise etwa 190 °C, durchgeführt wird;
• der Schritt nach der Vulkanisierung in einem Intervall von 24 bis 72 Stunden, vorzugsweise etwa 48 Stunden, und bei einer Temperatur von 90 bis 110 °C, vorzugsweise etwa 100 °C, durchgeführt wird.

7. Wärmehärtbares Elastomer nach Anspruch 3, wobei:
• das in der Zusammensetzung enthaltene Elastomer ausgewählt ist aus der Gruppe, bestehend aus NBR;
• der Formpressschritt oder der Spritzgießschritt in einem Intervall von 40 bis 250 Sekunden und bei einer Formtemperatur von 160 bis 210 °C, vorzugsweise etwa 190 °C, durchgeführt wird;
• der Schritt nach der Vulkanisierung in einem Intervall von 1 bis 3 Stunden, vorzugsweise etwa 2 Stunden, und bei einer Temperatur von 90 bis 110 °C, vorzugsweise etwa 100 °C, durchgeführt wird.

8. Wärmehärtbares Elastomer nach Anspruch 3, wobei:
• das in der Zusammensetzung enthaltene Elastomer ausgewählt ist aus der Gruppe, bestehend aus VMQ;
• der Formpressschritt oder der Spritzgießschritt in einem Intervall von 40 bis 280 Sekunden und bei einer Formtemperatur von 140 bis 200 °C, vorzugsweise etwa 170 °C, durchgeführt wird;
• der Schritt nach der Vulkanisierung in einem Intervall von 24 bis 72 Stunden, vorzugsweise etwa 48 Stunden, und bei einer Temperatur von 95 bis 115 °C, vorzugsweise etwa 105 °C, durchgeführt wird.

9. Wärmehärtbares Elastomer nach Anspruch 3, wobei:
• das in der Zusammensetzung enthaltene Elastomer ausgewählt ist aus der Gruppe, bestehend aus FFKM;
• der Formpressschritt oder der Spritzgießschritt in einem Intervall von 200 bis 500 Sekunden und bei einer Formtemperatur von 160 bis 210 °C, vorzugsweise etwa 180 °C, durchgeführt wird;
• der Schritt nach der Vulkanisierung in einem Intervall von 24 bis 72 Stunden, vorzugsweise etwa 48 Stunden, und bei einer Temperatur von 100 bis 120 °C, vorzugsweise etwa 110 °C, durchgeführt wird.

10. Wärmehärtbares Elastomer nach Anspruch 3, wobei:
• das in der Zusammensetzung enthaltene Elastomer ausgewählt ist aus der Gruppe, bestehend aus IIR;
• der Formpressschritt oder der Spritzgießschritt in einem Intervall von 40 bis 250 Sekunden und bei einer Formtemperatur von 160 bis 210 °C, vorzugsweise etwa 190 °C, durchgeführt wird;
• der Schritt nach der Vulkanisierung in einem Intervall von 1 bis 3 Stunden, vorzugsweise etwa 2 Stunden, und bei einer Temperatur von 90 bis 110 °C, vorzugsweise etwa 100 °C, durchgeführt wird.

11. Wärmehärtbares Elastomer nach Anspruch 3, wobei:
• das in der Zusammensetzung enthaltene Elastomer ausgewählt ist aus der Gruppe, bestehend aus HNBR;
• der Formpressschritt oder der Spritzgießschritt in einem Intervall von 40 und 250 Sekunden und bei einer Formtemperatur von 160 bis 210 °C, vorzugsweise etwa 190 °C, durchgeführt wird;
• der Schritt nach der Vulkanisierung in einem Intervall von 6 bis 10 Stunden, vorzugsweise etwa 8 Stunden, und bei einer Temperatur von 100 bis 120 °C, vorzugsweise etwa 110 °C, durchgeführt wird.

12. Verwendung des wärmehärtbaren Elastomers nach einem der Ansprüche 3 bis 11 zur Herstellung von Zitzenbecherauskleidungen für das Melken und/oder die Gewinnung von Milch von Tieren und/oder Menschen.

13. Verwendung des wärmehärtbaren Elastomers nach einem der Ansprüche 3 bis 11 auf dem Gebiet der Lebensmittelverpackung, vorzugsweise für die Verpackung von Eiern oder Geflügelfleisch.

14. Verwendung des wärmehärtbaren Elastomers nach einem der Ansprüche 3 bis 11 in Teilen von Maschinen für die Herstellung oder Verarbeitung von Lebensmitteln und/oder pharmazeutischen Produkten, Maschinen für Trinkwasseraufbereitungssysteme oder im Bereich medizinischer Vorrichtungen oder in häuslichen oder industriellen Sanitärsystemen, insbesondere in Dichtungselementen oder Dichtungen.

15. Verwendung des wärmehärtbaren Elastomers nach einem der Ansprüche 3 bis 11 zur Herstellung von Koffern, Behältern, Abdeckungen und dergleichen.

## Revendications

1. Composition adaptée à la production d'un élastomère thermodurcissable avec des capacités antimicrobiennes au moyen de la vulcanisation par moulage, comprenant :
• au moins un élastomère, de préférence sélectionné dans le groupe constitué de EPDM, VMQ, NBR, HNBR, NR, FKM, FFKM, BR et IIR ;
• au moins un catalyseur et/ou au moins un activateur de vulcanisation et
• un additif antimicrobien dans une quantité variant de 0,5 % à 5 %, de préférence environ 1 % en poids par rapport au poids total de ladite composition et comprenant à son tour de la pyrithione de zinc et du verre de phosphate d'argent dans un rapport 1:1 en poids, de préférence en une quantité totale en poids par rapport au poids total dudit additif antimicrobien d'au moins 98 %.

2. Composition selon la revendication 1, dans laquelle ladite composition comprend un ou plusieurs composés sélectionnés dans le groupe constitué d'agents vulcanisants, de plastifiants, d'antioxydants, d'agents de remplissage, d'agents de renforcement, d'agents colorants, d'adjuvants de processus, d'accélérateurs ou d'inhibiteurs.

3. Élastomère thermodurcissable avec des capacités antimicrobiennes obtenu par le biais d'un processus de vulcanisation comprenant :
• une étape de moulage par compression ou une étape de moulage par injection de la composition selon l'une des revendications 1 à 2, et
• une étape de post-vulcanisation.

4. Élastomère thermodurcissable selon la revendication 3, dans lequel :
• ledit élastomère compris dans ladite composition est sélectionné dans le groupe constitué de NR ;
• ladite étape de moulage par compression ou ladite étape de moulage par injection est réalisée dans un intervalle de temps allant de 60 à 180 secondes et à une température de moulage allant de 140 à 200 °C, plus préférablement environ 170 °C ;
• ladite étape de post-vulcanisation est réalisée dans un intervalle de temps allant de 1 à 3 heures, plus préférablement environ 2 heures, et à une température allant de 50 à 70 °C, plus préférablement environ 60 °C.

5. Élastomère thermodurcissable selon la revendication 3, dans lequel :
• ledit élastomère compris dans ladite composition est sélectionné dans le groupe constitué de EPDM ;
• ladite étape de moulage par compression ou ladite étape de moulage par injection est réalisée dans un intervalle de temps allant de 80 à 250 secondes et à une température de moulage allant de 160 à 210 °C, plus préférablement environ 190 °C ;
• ladite étape de post-vulcanisation est réalisée dans un intervalle de temps allant de 1 à 3 heures, plus préférablement environ 2 heures, et à une température allant de 90 à 110 °C, plus préférablement environ 100 °C.

6. Élastomère thermodurcissable selon la revendication 3, dans lequel :
• ledit élastomère compris dans ladite composition est sélectionné dans le groupe constitué de FKM ;
• ladite étape de moulage par compression ou ladite étape de moulage par injection est réalisée dans un intervalle de temps allant de 80 à 300 secondes et à une température de moulage allant de 160 à 210 °C, plus préférablement environ 190 °C ;
• ladite étape de post-vulcanisation est réalisée dans un intervalle de temps allant de 24 à 72 heures, plus préférablement environ 48 heures, et à une température allant de 90 à 110 °C, plus préférablement environ 100 °C.

7. Élastomère thermodurcissable selon la revendication 3, dans lequel :
• ledit élastomère compris dans ladite composition est sélectionné dans le groupe constitué de NBR :
• ladite étape de moulage par compression ou ladite étape de moulage par injection est réalisée dans un intervalle de temps allant de 40 à 250 secondes et à une température de moulage allant de 160 à 210 °C, plus préférablement environ 190 °C ;
• ladite étape de post-vulcanisation est réalisée dans un intervalle de temps allant de 1 à 3 heures, plus préférablement environ 2 heures, et à une température allant de 90 à 110 °C, plus préférablement environ 100 °C.

8. Élastomère thermodurcissable selon la revendication 3, dans lequel :
• ledit élastomère compris dans ladite composition est sélectionné dans le groupe constitué de VMQ ;
• ladite étape de moulage par compression ou ladite étape de moulage par injection est réalisée dans un intervalle de temps allant de 40 à 280 secondes et à une température de moulage allant de 140 à 200 °C, plus préférablement environ 170 °C ;
• ladite étape de post-vulcanisation est réalisée dans un intervalle de temps allant de 24 à 72 heures, plus préférablement environ 48 heures, et à une température allant de 95 à 115 °C, plus préférablement environ 105 °C.

9. Élastomère thermodurcissable selon la revendication 3, dans lequel :
• ledit élastomère compris dans ladite composition est sélectionné dans le groupe constitué de FFKM ;
• ladite étape de moulage par compression ou ladite étape de moulage par injection est réalisée dans un intervalle de temps allant de 200 à 500 secondes et à une température de moulage allant de 160 à 210 °C, plus préférablement environ 180 °C ;
• ladite étape de post-vulcanisation est réalisée dans un intervalle de temps allant de 24 à 72 heures, plus préférablement environ 48 heures, et à une température allant de 100 à 120 °C, plus préférablement environ 110 °C.

10. Élastomère thermodurcissable selon la revendication 3, dans lequel :
• ledit élastomère compris dans ladite composition est sélectionné dans le groupe constitué de IIR ;
• ladite étape de moulage par compression ou ladite étape de moulage par injection est réalisée dans un intervalle de temps allant de 40 à 250 secondes et à une température de moulage allant de 160 à 210 °C, plus préférablement environ 190 °C ;
• ladite étape de post-vulcanisation est réalisée dans un intervalle de temps allant de 1 à 3 heures, plus préférablement environ 2 heures, et à une température allant de 90 à 110 °C, plus préférablement environ 100 °C.

11. Élastomère thermodurcissable selon la revendication 3, dans lequel :
• ledit élastomère compris dans ladite composition est sélectionné dans le groupe constitué de HNBR ;
• ladite étape de moulage par compression ou ladite étape de moulage par injection est réalisée dans un intervalle de temps compris entre 40 et 250 secondes et à une température de moulage comprise entre 160 et 210 °C, plus préférablement à environ 190 °C ;
• ladite étape de post-vulcanisation est réalisée dans un intervalle de temps allant de 6 à 10 heures, plus préférablement environ 8 heures, et à une température allant de 100 à 120 °C, plus préférablement environ 110 °C.

12. Utilisation de l'élastomère thermodurcissable selon l'une des revendications 3 à 11 pour produire des manchons trayeurs pour la traite et/ou l'extraction du lait des animaux et/ou des humains.

13. Utilisation de l'élastomère thermodurcissable selon l'une des revendications 3 à 11 dans le domaine de l'emballage alimentaire, plus préférablement pour l'emballage des œufs ou l'emballage de la viande de volaille.

14. Utilisation de l'élastomère thermodurcissable selon l'une des revendications 3 à 11 dans des pièces de machines pour usines de production ou la transformation de produits alimentaires et/ou pharmaceutiques, de machines pour systèmes de traitement d'eau potable ou dans le secteur des dispositifs médicaux, ou dans des systèmes de plomberie domestique ou industrielle, en particulier les éléments d'étanchéité ou les joints.

15. Utilisation de l'élastomère thermodurcissable selon l'une des revendications 3 à 11 pour produire des caisses, des conteneurs, des éléments de couverture et autres de ce genre.
